# EUROPEAN PATENT APPLICATION

(11) **EP 4 687 044 A1**
(43) Date of publication of application: **04.02.2026**
(21) Application number: 25193282.8
(22) Date of filing: 31.07.2025
(51) Int. Cl.: G06F 13/42

(54) **DESTINATION INITIATED NETWORK TRANSMISSION FOR DATA STREAMS**

(30) Priority: 31.07.2024 US 202418791237; 02.10.2024 LU 103397; 30.07.2025 US 202519285541
(71) Applicant: Nvidia Corporation, Santa Clara, CA 95051 (US)
(72) Inventor: KHAZRAEE, Moein, Santa Clara, 95051 (US); BLAKE, Mathias, Santa Clara, 95051 (US); RANADIVE, Adit, Santa Clara, 95051 (US); O'GRADY, Patrick, Santa Clara, 95051 (US); WOO, Chunghoon, Santa Clara, 95051 (US); SIMPSON, Corey, Santa Clara, 95051 (US); LASSITER, Thomas Stewart, Santa Clara, 95051 (US); WU, John, Santa Clara, 95051 (US)
(74) Representative: Mathys & Squire

(57) **Abstract**

Approaches presented herein provide for the real-time backhauling of data streams direct to memory. In at least one embodiment, a host device can initiate a Remote Direct Memory Access (RDMA) transmission with a remote device for sensor data streams. Initialization data for the RDMA transmission can be sent from the host to the remote device, such as over an existing physical Ethernet or InfiniBand (IB) connection. The host device can enter a Ready-to-Receive (RTR) state and send instructions to the remote device to enter a Ready-to-Send (RTS) state. The RDMA transmission can be initialized between the host device and the remote device to transfer streaming data. Using a remote data manager, the streaming data can be sent over the existing Ethernet connection as a RDMA transmission and written directly to allocated memory. The system may be scaled to include higher throughput sensors, additional sensors, and multiple remote transmission devices.

## Description

### TECHNICAL FIELD

At least one embodiment pertains to processing resources used to backhaul data streams from remote sources. For example, a host device can solely initiate a direct-to-memory connection with a remote source of data, such as continuously streaming sensor data, which can provide for high-throughput and low-latency networking.

### BACKGROUND

Data streams can be generated by various devices, including sensors such as cameras, radios, audio receivers and other relevant devices. Processing of these data streams can range from initial processing to full real-time inference. However, real-time backhauling of continuous data from high data-rate sources to memory is challenging and requires an efficient implementation with throughput and latency guarantees. Additionally, the required scalability to process multiple data streams exacerbates the problems. Application-specific solutions using Peripheral Component Interconnect Express (PCIe) cards with connected Field Programmable Gate Arrays (FPGAs) have limited scalability. On the other hand, sending data with User Datagram Protocol (UDP) over a network can be scaled by sending additional streams over additional connections, but faces limitations in throughput and latency. Remote direct memory access (RDMA)-capable devices can benefit from the mature stack and Network Interface Card (NIC) acceleration capabilities to achieve high-throughput and low-latency, and benefit from scaling solutions provided by networks of the devices. However, both ends of a connection have to support the RDMA protocol capability and stack, requiring a considerable amount of logic resources which can be infeasible for some components.

### SUMMARY

The invention is defined by the claims. In order to illustrate the invention, aspects and embodiments which may or may not fall within the scope of the claims are described herein.

Approaches presented herein provide for the real-time backhauling of data streams direct to memory. In at least one embodiment, a host device can initiate a Remote Direct Memory Access (RDMA) transmission with a remote device for sensor data streams. Initialization data for the RDMA transmission can be sent from the host to the remote device, such as over an existing physical Ethernet or InfiniBand (IB) connection. The host device can enter a Ready-to-Receive (RTR) state and send instructions to the remote device to enter a Ready-to-Send (RTS) state. The RDMA transmission can be initialized between the host device and the remote device to transfer streaming data. Using a remote data manager, the streaming data can be sent over the existing Ethernet connection as a RDMA transmission and written directly to allocated memory. The system may be scaled to include higher throughput sensors, additional sensors, and multiple remote transmission devices.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Various embodiments in accordance with the present disclosure will be described with reference to the drawings, in which:
FIG. 1 illustrates an example system that can be used to initiate a direct-to-memory connection by a destination host, according to at least one embodiment;
FIG. 2 illustrates an example environment for transmitting a data stream from a remote device over a host device established remote direct memory access (RDMA) connection, according to at least one embodiment;
FIG. 3 illustrates an example packet format that can be used to stream data prepared using RDMA transfer data provided by an Ethernet connected host device, according to at least one embodiment;
FIG. 4 illustrates an example process that can be performed to initiate RDMA transmission of streaming data by a host device, according to at least one embodiment;
FIG. 5 illustrates an example process that can be performed to use a host device to initiate network transfer of streaming data direct to memory for processing, according to at least one embodiment;
FIG. 6 illustrates an example process that can be performed to prepare a data stream for transmission over a host established RDMA connection, according to at least one embodiment;
FIG. 7 illustrates components of a distributed system that can be used to generate, test, and use stereoscopic image data, according to at least one embodiment;
FIG. 8 illustrates an example data center system, according to at least one embodiment;
FIG. 9 is a block diagram illustrating a computer system, according to at least one embodiment;
FIG. 10 is a block diagram illustrating a computer system, according to at least one embodiment;
FIG. 11 illustrates a computer system, according to at least one embodiment;
FIG. 12 illustrates a computer system, according to at least one embodiment;
FIG. 13 illustrates exemplary integrated circuits and associated graphics processors, according to at least one embodiment;
FIGS. 14A and 14B illustrate exemplary integrated circuits and associated graphics processors, according to at least one embodiment;
FIG. 15 illustrates a computer system, according to at least one embodiment;
FIG. 16A illustrates a parallel processor, according to at least one embodiment;
FIG. 16B illustrates a partition unit, according to at least one embodiment; and
FIG. 17 illustrates at least portions of a graphics processor, according to one or more embodiments.

### DETAILED DESCRIPTION

### OVERVIEW

A first device (e.g. a host device) embodying the invention is configured to communicate with a second device over a network. The first device is configured to create a Queue Pair (QP) identifiable by a QP number. The QP may be an RDMA QP. The first device transitions the QP into a ready to receive state. To transition the QP into the ready to receive state, the first device is configured to: generate a pseudo-QP number and a pseudo send queue (SQ) packet sequence number (PSN) for the second device; set a destination network address attribute of the QP to the network address of the second device; set a destination QP number attribute of the QP to the pseudo-QP number; and set a receive queue packet sequence number attribute of the QP to the pseudo-SQ PSN. The first device transmits the QP number and pseudo-SQ PSN to the second device.

The first device may be configured to communicate with a plurality of second devices over the network. The first device is configured to create a Queue Pair (QP) for each second device, the QP for each second device identifiable by a unique QP number. The first device transitions each QP into a ready to receive state. To transition a QP for a given second device into the ready to receive state, the first device is configured to: generate a pseudo-QP number and a pseudo send queue (SQ) packet sequence number (PSN) for the given second device; set a destination network address attribute of the QP to the network address of the given second device; set a destination QP number attribute of the QP to the pseudo-QP number for the given second device; and set a receive queue packet sequence number attribute of the QP to the pseudo-SQ PSN of the given second device. The first device transmits the QP number and pseudo-SQ PSN for a given second device to the given second device.

The first device may be configured to communicate over the network using protocol data units, PDUs, comprising a header and a payload. The PDU header may comprise the network address of the first device and the network address of the second device. The PDUs may be data structures used for communication at the data link layer (layer 2) or network layer (layer 3) of the Open Systems Interconnection (OSI) model, such as Internet protocol suite PDUs or InfiniBand PDUs. For example, the network may be a layer 2 network and the PDU header may comprise InfiniBand Local Identifier (LID) or Media Access Control (MAC) addresses of the first and second devices. For another example, the network may be a layer 3 network (e.g. the first device may be on a first layer 2 network, the second device may be on a second layer 2 network, and the first and second layer 2 networks may be connected by a router) and the PDU header may comprise InfiniBand Global Identifier (GID) or Internet Protocol (IP) addresses of the first and second devices.

The PDUs may be PDUs of a connectionless protocol. By using PDUs of a connectionless protocol, the second device is able to exchange PDUs with the second device without establishing a connection, thereby reducing the resources required at the second device. For example, the PDUs may be Media Access Control PDUs. Additionally or alternatively, the PDUs may be PDUs of an unreliable protocol. For example, the PDUs may be IP datagrams or UDP datagrams. By using PDUs of an unreliable protocol, the second device is able to exchange PDUs without error checking, thereby reducing the resources required at the second device.

The PDU payload of a PDU transmitted by the second device to the first device may include a transport header and data to be written to a memory of the first device. The PDU payload may comprise additional transport headers. For example, the PDU payload may include a User Datagram Protocol (UDP) header. In other words, the PDU payload may comprise a UDP datagram encapsulating the transport header and data to be written to a memory of the first device.

The transport header may comprise the QP number and the pseudo-SQ PSN. For example, the transport header may comprise an InfiniBand Base Transport Header (BTH). The transport header of the payload of at least some of the PDUs may further comprise a memory address of a memory region of the first device and a key for accessing the memory region. For example, the transport header may further comprise a Remote Direct Memory Access (RDMA) Extended Transport Header (RETH).

The first device may transmit the QP number and pseudo-SQ PSN for a given second device to the given second device in a PDU payload. The PDU payload of the PDU transmitted by the first device to the second device may include the entire transport header to be transmitted in the PDU payload of a PDU transmitted by the second device. Upon receipt the transport header by the first device, the first device may be configured to create an additional Queue Pair (QP) identifiable by a unique QP number. To transition the additional QP into the ready to receive state, the first device is configured to: generate an additional pseudo-QP number and an additional pseudo send queue (SQ) packet sequence number (PSN) for the second device; set a destination network address attribute of the additional QP to the network address of the second device; set a destination QP number attribute of the additional QP to the additional pseudo-QP number; and set a receive queue packet sequence number attribute of the additional QP to the additional pseudo-SQ PSN. The first device transmits the additional QP number and additional pseudo-SQ PSN to the second device. In this way, a given second device may transmit a plurality of data streams - for example, a first stream from a first sensor and a second stream from a second sensor.

The first device may be configured to perform an operation upon receipt of a PDU. For example, a network adapter of the first device may be configured to perform a Receive, RDMA Write, or RDMA Write With Immediate operation. The first device may be configured to perform at least one of a plurality of operations upon receipt of PDU based on an operation code included in the transport header of the PDU payload. For example, the network adapter of the first device may be configured to perform at least one of a Receive, RDMA Write, or RDMA Write with Immediate operation based on an operation code included in the transport header of the PDU payload.

The first device may register a Memory Region (MR) to allow remote devices, such as the second device, write access to the MR. Memory registration sets permissions for the MR, such as local write and/or remote write. A MR has a remote key and a local key. Local keys are used by the network adaptor of the first device to access local memory, such as during a receive operation. Remote keys are given to the remote devices to allow the remote device access to the memory region during RDMA operations. The first device may be configured to register a memory region, setting permissions for the memory region to remote write, and transmit a memory address of a memory region of the first device and the remote key for accessing the memory region to the second device.

The data of a PDU payload may comprise a message, such as a sensor reading to be written to a memory of the first device. For example, the transport header may comprise a REMOTE Write operation code, such as a REMOTE WRITE Only operation code. The PDU payload may further comprise immediate data, such as a timestamp of the sensor reading. In which case, the operation code may a REMOTE Write with Immediate code, such as a REMOTE WRITE Only with Immediate code. For example, the payloads of a sequence of PDUs may each comprise a sensor reading to be written to a memory of the first device and a timestamp of the sensor reading. A network adapter of the first device may perform a REMOTE WRITE Only with Immediate operation, writing the message to memory and providing the immediate data to a processor of the first device.

The data of a PDU payload may comprise a portion of a message, such as a portion of a sensor reading to be written to a memory of the first device. The first device may be configured to receive a sequence of PDUs comprising a first PDU and a last PDU, wherein the data of the payload of the first PDU comprises a first portion of a message, wherein the data of the payload of the last PDU comprises a last portion of a message. The sequence of PDUs may further comprise at least one middle PDU (i.e. a PDU containing a portion of a sensor reading between the first and last portion). For example, the message may be a sensor reading. The payload of the last PDU may further comprise immediate data. The first device may write the message to memory and then provide the immediate data to a processor of the first device. For example, the immediate data may be a timestamp of the sensor reading.

The transport header of the first PDU in the sequence may comprise an operation code identifying the PDU as being the first PDU as the first PDU in the sequence. The transport header of the first PDU may further comprise a memory address of a memory region of the first device and a key for accessing the memory region. For example, the operation code in the transport header of the first PDU may be an RDMA WRITE First operation code. The transport headers of the at least one middle PDU might include an operation code indicating that the PDU is a middle PDU in the sequence. For example, the operation code may be an RDMA WRITE Middle operation code. The transport header of the last PDU might include an operation code that it is a last PDU in the sequence. For example, the operation code may be an RDMA WRITE Last operation code or an RDMA WRITE Last with Immediate operation code. The transport headers of the middle and last PDUs may not comprise a memory address of a memory region of the first device and a key for accessing the memory region.

The transport header of each payload of each PDU of the sequence of PDUs may comprise a memory address of a memory region of the first device and a key for accessing the memory region. For example, the first and any middle PDUs may comprise an RDMA WRITE Only operation code and the last PDU may comprise an RDMA WRITE Only with Immediate. The message comprises a sensor reading, and the immediate data may specify a timestamp of the sensor reading.

The first device may collect and/or analyse the sensor readings. For example, the memory region may be a region of GPU memory and the first device may use the GPU to analyse the sensor readings in real time. The first device may analyse the sensor readings using a machine learning algorithm, such as a neural network.

A method embodying the invention is performed by a first device configured to communicate with a second device over a network. The method comprises creating a Queue Pair (QP) identifiable by a QP number and transitioning the QP into a ready to receive state. To transition the QP into the ready to receive state, the first device is configured to: generate a pseudo-QP number and a pseudo send queue (SQ) packet sequence number (PSN) for the second device; set a destination network address attribute of the QP to the network address of the second device; set a destination QP number attribute of the QP to the pseudo-QP number; and set a receive queue packet sequence number attribute of the QP to the pseudo-SQ PSN. The first device transmits the QP number and pseudo-SQ PSN to the second device.

A second device (e.g. a remote device) embodying the invention is configured to communicate with the first device over a network. The second device is configured to receive a Queue Pair (QP) number and pseudo send queue (SQ) packet sequence number (PSN) from the first device. The second device stores the QP number and pseudo-SQ PSN. The second device transmits protocol data units (PDUs) comprising a header and a payload. The header comprises a network address of the second device. The payload includes a transport header and data to be written to a memory of the first device. The transport header comprises the QP number and the pseudo send queue PSN.

The network address may comprise a layer 2 address, such as a Media Access Control address or a Local Identifier. Additionally or alternatively, the network address may comprise a layer 3 address, such as an Internet Protocol address or Global Identifier.

The second device may comprise processing circuitry, such as a Field Programmable Gate Array (FPGA), configured construct the payload of the protocol data units, and a network interface for connecting the processing circuitry to the network. The processing circuitry may comprise a MAC block and a Media Independent Interface (MII) to connect the MAC block to the network interface. The MII may be Reduced MII, Gigabit MII, Reduced Gigabit MII, or Serial MII, for example. The network interface may comprise at least one fixed media port, for example a port for receiving a modular connector (e.g. an ethernet connector), such as an RJ45 port. Additionally or alternatively, the network interface may comprise at least one port for receiving various media types, for example a port for receiving a network interface module, such as a small form-factor pluggable port. The second device may comprise a printed circuit board comprising the processing circuitry and network interface.

The processing circuitry may comprise at least one register to store the transport header. The register may be persistent. The second device stores the QP number and pseudo-SQ PSN received from the first device in the transport header stored in the at least one register. The processing circuitry constructs the payload by copying the transport header into the payload together with the data to be written to the memory of the first device. The processing circuitry then increments the pseudo-SQ PSN in the register. In this way, the processing circuitry may transmit RDMA packets without implementing a full RDMA stack. For example, the processing circuitry does not need to create a QP.

The data to be written to memory of the first device may comprise at least a portion of a sensor reading. For example, the second device may comprise a sensor interface configured to connect at least one sensor to the processing circuitry. The sensor interface may comprise an FPGA Mezzanine Card connector. The sensor interface may comprise at least one Scalable Low-Voltage Signalling with Embedded Clock (SLVS-EC) interface for an image sensor. The second device may further comprise at least one sensor, such as an image sensor.

A method embodying the invention is performed by a second device configured to communicate with the first device over a network. The method comprises: receiving a Queue Pair, QP, number, and pseudo send queue, SQ, packet sequence number, PSN, from the first device; storing the QP number and pseudo-SQ PSN; transmitting protocol data units comprising a header and a payload, wherein the header comprises a network address of the second device, wherein the payload includes a transport header and data to be written to a memory of the first device, the transport header comprising the QP number and the pseudo send queue PSN.

A system may comprise the first device and second device. The system may comprise a plurality of second devices. The second device(s) may remotely write sensor readings to the memory (e.g. GPU memory) of the first device. The system may be an AI Computing Platform for Medical Devices and Computational Sensing Systems. The system may also be an AI Computing Platform for telemetry data.

### SYSTEM DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

The systems and methods described herein may be used by, without limitation, medical devices (e.g. robots, visualization and measurement tools, therapy application devices, etc.) using sensors for visual and hyperspectral data, ultrasound, or other physical phenomena, non-autonomous vehicles or machines, semi-autonomous or autonomous vehicles or machines (e.g., in one or more advanced driver assistance systems (ADAS), one or more in-vehicle infotainment systems, one or more emergency vehicle detection systems), piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, trains, underwater craft, remotely operated vehicles such as drones, and/or other vehicle types. Further, the systems and methods described herein may be used for a variety of purposes, by way of example and without limitation, for machine control, machine locomotion, machine driving, synthetic data generation, generative AI, model training or updating, perception, augmented reality, virtual reality, mixed reality, robotics, security and surveillance, simulation and digital twinning, autonomous or semi-autonomous machine applications, deep learning, environment simulation, data center processing, conversational AI, light transport simulation (e.g., ray-tracing, path tracing, etc.), collaborative content creation for 3D assets, generative AI, cloud computing, and/or any other suitable applications.

Disclosed embodiments may be comprised in a variety of different systems such as automotive systems (e.g., an in-vehicle infotainment system for an autonomous or semi-autonomous machine, a perception system for an autonomous or semi-autonomous machine), systems implemented using a robot, aerial systems, medical systems, boating systems, smart area monitoring systems, systems for performing deep learning operations, systems for performing simulation operations, systems for performing digital twin operations, systems implemented using an edge device, systems incorporating one or more virtual machines (VMs), systems for performing synthetic data generation operations, systems implemented at least partially in a data center, systems for performing conversational AI operations, systems implementing one or more language models -- such as large language models (LLMs), systems for performing generative AI operations (e.g., using one or more language models, transformer models, encoder/decoder models, etc.), systems for performing light transport simulation, systems for performing collaborative content creation for 3D assets, systems implemented at least partially using cloud computing resources, and/or other types of systems.

Approaches in accordance with various illustrative embodiments provide for the initiation, by a host device, of a network transmission of streaming data from one or more devices, such as continuously-streaming sensors. In particular, at least one embodiment takes advantage of remote direct memory access (RDMA) stack capabilities on host devices to process RDMA transmissions from remote devices that may not have the RDMA stack capabilities. The RDMA connection can use InfiniBand (IB) or RDMA over Converged Ethernet (RoCE), and can also use Reliable Connection (RC) protocol or Unreliable Connection (UC) protocol. For example, a host device can allocate memory to receive a RDMA transmission associated with streaming data, such as from remote sensor over an existing physical Ethernet connection. The memory used for receiving the data can be allocated from graphics processing unit (GPU) memory, central processing unit (CPU) memory, or other suitable memory. The host device can generate information that is relevant for the transmission of the data, and can include values such as addresses in the allocated memory, an identification number, a remote key, or other data. The generated host information can be sent to a communication management device or software, such as one or more Field Programmable Gate Arrays (FPGAs), Application-Specific Integrated Circuits (ASICs), microcontroller, or other networking component, on the remote device. In an embodiment, the generated host information can be sent over a pre-existing network connection using a suitable protocol, such as User Datagram Protocol (UDP).

After sending the required data to the remote device, the host device can enter a Ready-to-Receive (RTR) state and send instructions to the remote device to enter a Ready-to-Send (RTS) state to complete one destination initiated RDMA connection setup. The streaming data can be processed and placed into RDMA compatible packets before transmission. The streaming data can be split into portions that are included in individual packets. The packets can be prepared to include values from the host information and values from information generated by the remote device relevant for the transmission of the data. The RDMA packets can be transmitted from the remote device to the host device over a suitable network connection, such as physical Ethernet or IB. A Network Interface Card (NIC) on the host device can bypass the operating system (OS) and write the streaming data directly to the allocated memory. The streaming data can be processed on the allocated memory, such as for training models, performing inferences, or other applications. In an embodiment, the streaming data can be provided from multiple sensors, which may transmit stream data locally to multiple communication management devices connected remotely to the host device.

In at least one embodiment, a networked system can prepare a data stream for transmission over a host-established direct-to-memory connection. The networked system attached (or locally connected) to one or more streaming devices can prepare a data stream for transmission, based in part on routing data and RDMA connection associated with a host device to receive the data stream. The streaming devices can include one or more sensors streaming data to be processed. The networked system and the host device can be connected by at least one network, such as an Ethernet network. The data stream can be split into separate packets by the networked system, or by components of the networked system, such as FPGAs or ASICs. In some embodiments, frames of the data stream can be split into the sperate packets. The networked system can include relevant values for transmission, such as information from the routing data, RDMA connection, metadata, or other suitable values, in the packets along with the streaming data. The networked system can also generate packets for the final packet of a frame to notify the host that a complete frame has been delivered. This final packet can also include a timestamp that is provided to the host with the notification. The networked system can receive instructions to enter a RTS state to transmit directly to memory. The data stream of the packets can be routed to the memory of the host device based on the header information included in the packets by the networked system. The transmitted data stream can be written directly to memory of the host device.

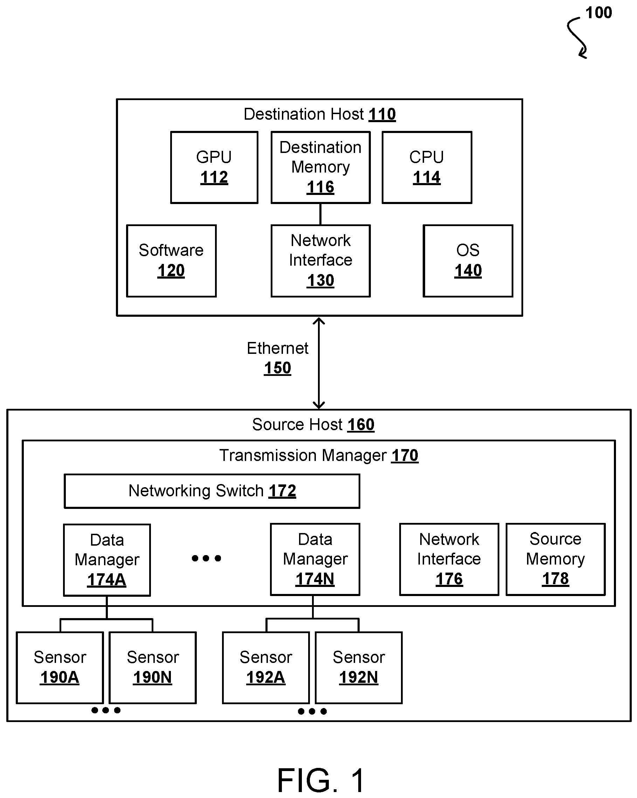

FIG. 1 illustrates example system 100 for initiation of a direct-to-memory connection by a destination host 110, according to at least one embodiment. In this example, the system 100 includes a destination host 110 and a source host 160, able to communicate over at least an Ethernet network (or other network such as IB) connection 150. The destination host 110 may include components for processing data, values, streams, and other suitable information, including one or more of a GPU 112, a CPU 114, a destination memory 116, a transmission software 120, a network adapter or interface 130, such as a NIC, and an operating system (OS) 140. The destination host 110 may include other components without limitation, including those used for at least processing, sending, and receiving information. The destination host 110 may be able to perform high performance computing workloads, such as machine learning (ML) model training and performing inferences using artificial intelligence (AI). The GPU 112 and the CPU 114 may be able to perform processing of data on the destination memory 116. In an embodiment, the destination memory 116 may include one or more of the GPU 112 memory, the CPU memory 114, and other suitable memory. The destination network interface 130 may be able to send and receive data over the Ethernet connection 150, and may be able to write the data received over the Ethernet connection to the destination memory 116. The OS 140 may control one or more processes on the destination host 110, and may manage some data transfers of the destination host 110, such as those over Ethernet 150 and those between network interface 130 and destination memory 116. However, the OS 140 may be bypassed by data transferred which write directly to memory, such as some RDMA transmissions. In an embodiment, the Ethernet connection 150 may be any other suitable connection over which data can be transferred. The transmission software 120 may be able to manage one or more aspects of the transmission of data related to the destination host 110, including but not limited to real-time backhauling of continuous data from high data-rate sensors. In an embodiment, the transmission software 120 may be used to prepare and initiate transmission of data to and from the destination host 110, such as with source host 160. The transmission software 120 may be used to cause one or more actions, such as procedures or processes, to occur for transmission of data directly to or from the destination memory 116 over the Ethernet connection.

The source host 160 may include components for processing data, values, streams, and other suitable information, including one or more of a transmission manager 170 and one or more sensor(s), such as first sensor(s) 190A-190N (e.g., 190A, 190B, 190C, 190D, through 190N-1, and 190N) and second sensor(s) 192A-192N (e.g., 192A, 192B, 192C, 192D, through 192N-1, and 192N). The transmission manager 170 may include one or more of a networking switch 172, a network interface 176, and a source memory 178. The transmission manager 170 may include one or more data manager(s) 174, such as data manager(s) 174A-174N (e.g., 174A, 174B, 174C, 174D, through 174N-1, and 174N). In an embodiment, the source host 160 may include one or more of the networking switch 172, data managers 174, network interface 176, and source memory 178, but not include the transmission manager 170. In an embodiment, the source host 160 may not include the networking switch 172, or the networking switch 172 may be incorporated into one or more other components. In another embodiment, the networking switch 172 may be external to the source host 160, such as located on a remote device. In another embodiment, one or more of the networking switch 172 may be connected among the sensors 190, 192, acting as an arbiter. The source host 160 may include other components without limitation, including those used for at least processing, sending, and receiving information. The transmission manager 170 or components of the transmission manager 170 may be locally attached with the sensors 190, 192 and may manage traffic between the sensors and the destination host 110. The source host 160 may include data managers 174 and one or more sensors in suitable combinations. For example, the source host 160 may include one of the first sensor 190 connected to one of the data managers 174. In another example, the source host 160 may include more than one of the first sensors 190 connected to one or more of the data managers 174. In yet another embodiment, the source host 160 may include one or more of the first sensors 190 one or more of the second sensors 190 connected to one or more of the data managers 174. The data managers 174 may be connected to the networking switch 172, which can manage traffic to and/or from the data managers 174. The network interface 176 may be able to send and receive data over the Ethernet connection 150, and may be able to write the data received over the Ethernet connection to the source memory 178. In an embodiment, the source memory 178 may include a suitable memory type for sending or receiving data over the Ethernet connection 150. In an embodiment, the transmission software 120 may be used to cause one or more actions, such as procedures or processes, to occur for transmission of data directly to or from the source memory 178 of the source host 150 over the Ethernet connection. The components of the destination host 110 and the source host 160 may include one or more edge platforms, hyperconverged cards, and data processing units (DPUs).

The sensors 190, 192 may include one or more cameras, radios, audio receivers, or other devices. The sensors 190, 192 may generate a continuous stream of data which can be processed on destination memory 116, such as the GPU 112 memory. The processing of the stream of data may include training or inferring, including full real-time inference for medical applications, such as robotic surgery. The system 100 may use the destination host 110 to establish a connection between a resource-limited device, such as remote data managers 174, locally attached to the sensors 190, 192, and the destination host 110. The established connection over the Ethernet network 150 may be a RDMA connection, and may use the RDMA capabilities of the network interface 130 to achieve high-throughput and low-latency communication directly to destination memory 116 for further processing, even when source host 160 does not have RDMA stack or RDMA stack capabilities. The RDMA may be used to write directly, bypassing the OS 140. Switching technology, such as one or more of the networking switches 172, may be used to scale up the number of sensors 190, 192 while achieving the desired performance and latency.

In at least one embodiment, the data managers 174 not attached to at least some data transfer connections, such as Peripheral Component Interconnect Express (PCIe) buses, may be able to directly transfer data with the connection established by the destination host 110, instead of relying on the data transfer connections. In an embodiment, only the destination network interface 130 capabilities, such as RDMA stack capabilities, may be used for the streamed data from the sensor using RDMA protocol, without requiring or using at least some capabilities of the source network interface 176. In an example, the destination host 110 or components of the destination host 110 may be used to make the transmission manager 170 or components of the transmission manager 170 a passive device, which can still generate legitimate RDMA packets that can be properly processed on the destination host 110 and written directly into destination memory 116, without requiring the OS to write the data. In an example, the packets can be written directly using the GPU-Direct capability or other suitable capabilities. RDMA is supported natively in InfiniBand (IB) devices, and in Ethernet NICs with RoCE capabilities. Therefore, the system 100 may include one or more IB devices or RoCE devices to support the initiation of the direct-to-memory connection by the destination host 110. The switching infrastructure of the RDMA capable devices can be used to scale with sensors 190, 192 having higher throughput and/or additional sensors 190, 192. In an embodiment, multiple of the data managers 174 may be connected to the networking switch 172. Individual IP addresses may be assigned to each of the individual data managers 174. The destination host 110 may communicate some individual data to the individual data managers 174, and may initialize with the individual data managers 174 independently. In an embodiment., the data managers 174 may send a request using an internet protocol to automatically configure the data managers 174 to receive an IP address, and then the destination host 1110 may send relevant data to the data managers 174 to initialize the connection.

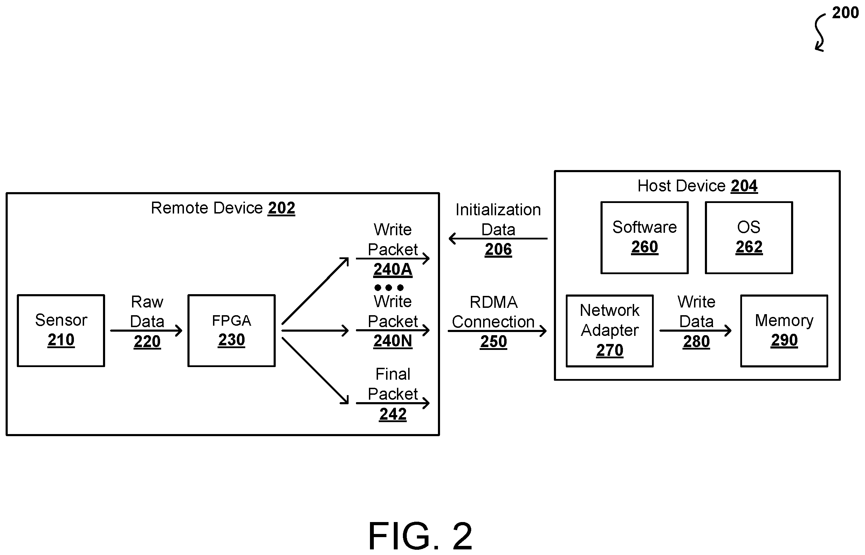

FIG. 2 illustrates an example environment 200 for transmitting a data stream from a remote device 202 over a host device 204 established RDMA compatible connection 250, according to at least one embodiment. In an embodiment, the host device 204 may establish an RDMA connection 250 with RC or UC protocols in order to use GPU-Direct capabilities. The UC protocol may not require maintaining storage of older packets to achieve reliability in case of drops in the transmission. The RDMA connection 230 may be other connection types that are suitable for the transfer of streaming data. For a conventional process to initialize a RDMA connection, the two sides control their respective actions to exchange initialization data required to transfer data. During this conventional process, the two sides also control their respective actions to coordinate the state machines of both sides, where the sending side state progresses from Reset state to RTS state and the receiving side state progresses from Reset state to RTR state.

In an embodiment, the RDMA connection 250 of the environment may be an IB or a RoCE connection which implements use of the states. A destination host 110 initiated RDMA connection 250 may instead control the actions of a FPGA 230 of the remote device 202 to open the RDMA connection 250, in place of control by the remote device 202. In an embodiment, the remote device 202 may include at least one of a sensor 210 and the FPGA 230 communicably connected with the host device 204, such as by a physical Ethernet or IB connection. The sensor 210 may be one or more sensors which generate streaming data. The FPGA 230 may be one or more data transmission devices, such as a FPGA, ASIC, communication circuitry, software, microcontrollers, or other suitable components. The host device 204 may include at least one of a software 260, an OS 262, a network adapter 270 and memory 290. The software 260 may be used at least in part to initialize the RDMA connection 250. The OS 262 may be used to process at least some data transmission of the host device 204. The network adapter may be used to communicate over the RDMA connection 250. The memory 290 may be able to store information communicated over the RDMA connection 250, such as between the remote device 202 and the host device 204.

The memory 290 may be allocated to receive data 280, and may be allocated by the software 270. The initialization data 206 for the potential RDMA connection 250 may be generated and/or collected by the host device 204, and may be caused to be generated and/or collected by the software 270. The initialization data 206 may include, but not limited to, an identification number for the RDMA connection 250, the address in memory 290 that can be written to, and a corresponding key to avoid writes to the memory 290 address by illegitimate entities. In an example, the identification number may be a queue pair number (QPN). In an example, the key may be a remote key (R-key). The initialization data 206 may be sent using the existing connection protocol, such as UDP, to the FPGA 230, and may be caused to be sent by the software 270. In contrast to the conventional process, the initialization data 206 may only be sent to the source device 202, and the source device 202 may not send any initialization data 206 in order to initialize the RDMA connection 250. The host device 204 may enter the RTR state without waiting for coordination with the remote device 202, and may be caused to enter the RTR state by the software 270. The host device 204 may send using the existing connection protocol, such as UDP, instructions, such as commands or other suitable information, to the remote device 202 to enter the RTS state, and may be caused to send the instructions by the software 270. In contrast to the conventional process, the source device 202 may allow only the host device 204 to coordinate the states, and the source device 202 may be passive during coordination of the states in order to initialize the RDMA connection 250. These changes of connection initialization may remove the need for complicated logic of the FPGA 230 hardware in charge of the setup or initialization procedure.

To transmit a data stream from the remote device 202 over the RDMA connection 250 established by the host device 204, the sensor 210 transmits raw data 220 of the data stream to the FPGA 230. The FPGA 230 may frame the raw data 202 and may portion the raw data 220 to be stored on one or more packets, which may be single packet RDMA WRITE messages. In some embodiments only a limited number of packet types may be used. The FPGA 230 may split the raw data 220 on to one or more write packet(s), such as write packet(s) 240A-240N (e.g., 240A, 240B, 240C, 240D, through 240N-1, and 240N), and a final packet 242. In an embodiment, host device 204 may set the size of the frames and packets 240, 242, such as using writes to registers on the remote device 202, and may be set by the software 260. The write packets 240 may include all of the raw data 220 of an individual frame except the final portion or section, which is stored on the final packet 242. A WRITE-with-Immediate packet type may be used to include a timestamp of the frame in the final packet 242. After transmission of the packets 240, 242 of a frame, the final packet 242 may indicate to the host device that the entire frame has been delivered and may be consumed or processed. In an embodiment, the final packet 242 is provided as a notification to the software 260.

The FPGA 230 may include at least a portion of the initialization data 206 in the packets 240, 242, and may include data associated with the remote device 202 relevant to the connection, such as the remote device 202 MAC address. The FPGA 230 may include in individual ones of the packets 240, 242 at least one or more of a specific address within the allocated memory 290 for the data, a packet number, a length of the data, or other relevant information. This information for the individual ones of the packets 240, 242 may allow the raw data 220 to be transmitted and stored to the memory 290 properly. The packets 240, 242 may be transmitted over the initialized RDMA connection 250 to the host device 204. The packets 240, 242 may be received to the network adapter 270, which may write the portions of the raw data 220 stored in the packets 240, 242 as write data 280 directly to the memory 290 from the wire. The write date 280 stored on the write packets 240 may be written directly to the memory 290 without notifying the software 260. In some embodiments, the software 260 may control the network adapter 270 to bypass the OS 262 when storing the write data 280 on the memory 290. In an embodiment, multi-packet messages may be prepared by the FPGA 230 and used with the RDMA connection 250. In an embodiment, SEND messages may be used in addition to the RDMA connection 250. In an example, the system 100 may transmit using the RDMA connection 250 at one or more link speeds, such as about 2x10G link speeds, 2x100G link speeds, or other suitable link speeds. In another embodiment, the system 100 may not include RDMA capable network adapters 270, and may instead include software support for RDMA, such as Soft-RoCE or other suitable support.

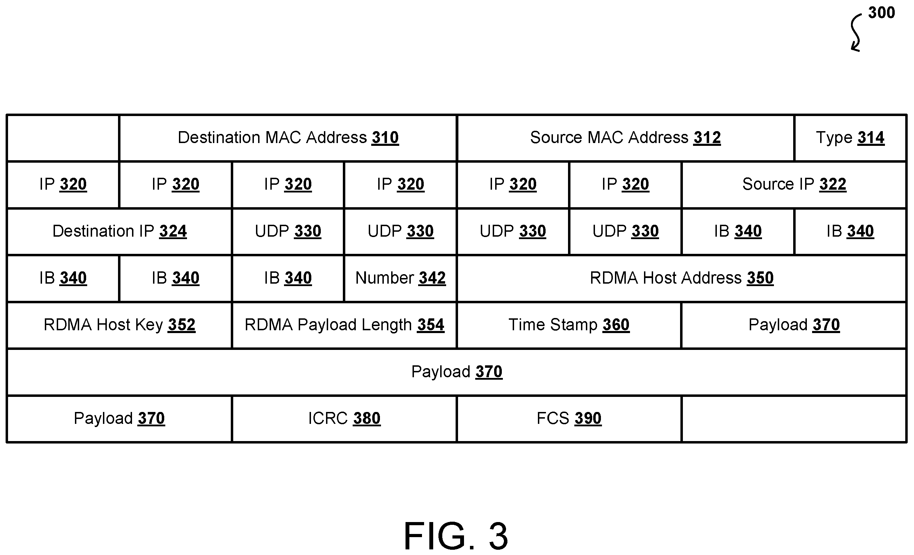

FIG. 3 illustrates an example packet format 300 that can be used to stream data prepared using RDMA transfer data provided by an Ethernet connected host device, according to at least one embodiment. Such a packet format 300 can take the form of a communication protocol frame used for transmitting the data stream as illustrated in FIG. 2, such as the final packet 242. In an embodiment, the packet 240 as illustrated in FIG. 2 may have a format similar to the packet format 300, such as with a different type 324 and not including time stamp 360. The packet format 300 may be updated by a communication management device, such as a FPGA or an ASIC on a remote device, to be sent to the host device. The packet format 300 may initially be a UDP format, and may be include connection data required for the RDMA transmission. The connection data may first be updated, and may include a MAC header, an internet protocol (IP) header, and an UDP header. The RDMA connection data may include an IB header and an RDMA header, among other such options. The MAC header may include destination MAC address 310 from the destination host, source MAC address 312 from the source host, Ether-type 314 which may be from the destination host, and frame check sequence (FCS) 390. The frame check sequence (FCS) 390 may be included in the packet format 300 trailer. The IP header may include one or more IP data 320, such as IPv4, IP length, identification, flags, Time to Live (TTL), UDP protocol, IP CRC, source IP 322 of the communication management device, and destination IP 324 of the host device. The UDP header may include one or more UDP data 330, such as stream ID, RoCE port, UDP length, and UDP checksum. The IB header may only be used for IB transmissions and include one or more IB data 340, such as packet type, flags, partition key, context ID, packet number 342, and ICRC 380. The ICRC 380 may be included in the packet format 300 trailer. The RDMA header may include RDMA host address 350 from the destination host for writing the data, RDMA host key 352 from the destination host, and payload length 354. The packet format 300 may include timestamp 360, such as in the final packet of a frame of data. The packet format 300 may include payload, such as the raw data of the data stream.

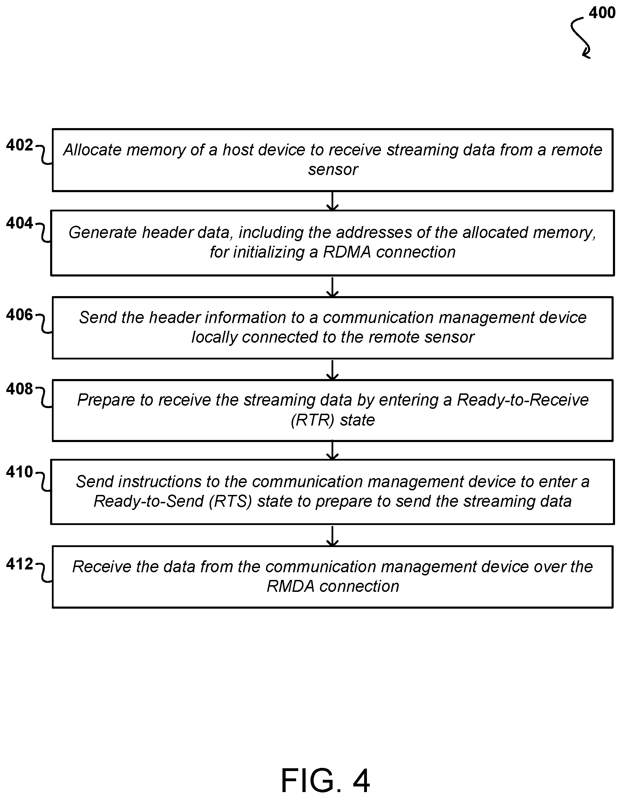

FIG. 4 illustrates an example process 400 that can be performed to initiate RDMA transmission of streaming data by a host device, in accordance with at least one embodiment. It should be understood that for this and other processes presented herein that there can be additional, fewer, or alternative steps performed or similar or alternative orders, or at least partially in parallel, within the scope of the various embodiments unless otherwise specifically stated. Further, although this and other examples herein will be discussed with respect to RDMA connections for sensor streaming data, there can be other types of connections and data for host-initiated transmissions as well, within the scope of various embodiments. In this example, memory of a host device can be allocated 402 to receive streaming data. The memory can be the application memory used for processing, such as GPU memory or CPU memory. The streaming data can include data from a remote sensor, and can be continuous streaming data. Header data, including addresses in the allocated memory, can be generated 404 for initializing a RDMA connection to the host device. The header data can also include an identification number, such as an QPN, and a remote key. The RDMA connection may be RC or UC protocol. The header information can be sent 406, such as over an existing UDP connection, to a communication management device locally connected to the remote sensor. The communication management device can include one or more FPGA, ASIC, or other networking device. The communication management device can be locally connected to additional remote sensors.

The host device can be prepared 408 to receive the streaming data by entering a RTR state. Software located on the host device can cause the RTR state to be entered. The host device may not wait for the communication management device to enter a RTS before entering the RTR state. Instruction can be sent 410, such as over an existing UDP connection, to the communication management device to enter a RTS state to prepare to send the streaming data. Software located on the host device can cause the instructions to be sent to the communication management device. The communication management device can go directly to the RTS state and bypass other states. The data from the communication management device can be received 412 over the RDMA connection. The communication management device may generate RDMA packets to be sent over the RDMA connection. The communication management device may not include logic for initializing the RDMA connection and can be passive related to the initialization. The RDMA connection can use an existing physical Ethernet or IB connection to transmit the streaming data.

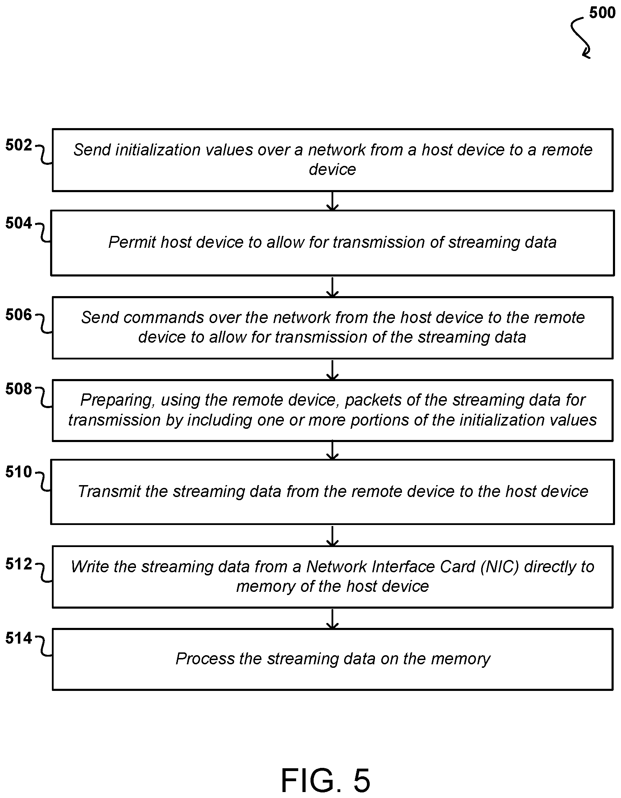

FIG. 5 illustrates an example process 500 that can be performed to use a host device to initiate network transfer of streaming data direct to memory for processing, in accordance with at least one embodiment. In this example, initialization values can be sent 502 over a network, such as over an existing UDP connection, from a host device to a remote client device. The initialization values can include memory addresses, identification numbers, and keys. The network can include a physical Ethernet connection. The remote client device can be connected to one or more continuously streaming sensors. The host device can be permitted 504 to receive streaming data. The streaming data can be packets associated with data streams produced by one or more remote devices, such as sensors. The host device can receive streaming data by entering a state indicating data can be received. Commands can be sent 506 over the network, such as over an existing UDP connection, from the host device to the remote client device to allow for transmission of the streaming data. The client device may not be able to allow for transmission of the streaming data without receiving the commands. Packets of the streaming data can be prepared 508, using the client device, for transmission by including one or more portions of the initialization values. Individual frames of the streaming data can be split into the packets. The client device can include routing information and connection information from the initialization values in the packets, such as in the header, along with the frame data payload.

The streaming data can be transmitted 510, using the initialization values, from the client device to the host device. The packet transmission can be performed using an RDMA connection. The transmission can use routing information, as well as identification or keys, to enable proper routing and writing of the streaming data. The streaming data can be written 512 from a Network Interface Card (NIC) directly to memory of the host device. The NIC can be located on the host device and receive the streaming data from physical Ethernet connection using RDMA. The memory can be GPU memory, CPU memory, or any other suitable memory. The streaming data can bypass the host device OS to be written to the memory. The streaming data can be processed 514 on the memory. The processing can include AI use cases and/or applications, such as training models or performing inferences, performed by GPU. The streaming data can be written using GPU-Direct or other suitable stacks or processes.

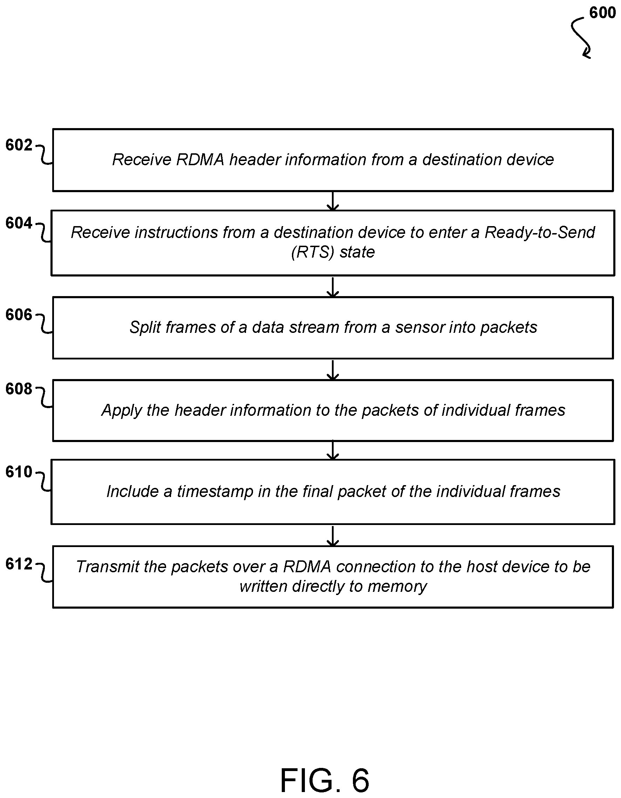

FIG. 6 illustrates an example process 600 that can be performed to prepare a data stream for transmission over a host established RDMA connection, in accordance with at least one embodiment. In this example, RDMA header information can be received 602 from a destination device. The RDMA header information can be received over an Ethernet connection. The RDMA header information can include information to be added to RDMA packets to enable transmission. The destination device can include memory addressed to be written to by a RDMA connection. Instructions can be received 604 from the destination device to enter a RTS state. The destination device may already be in a RTR state. The instructions can be received over an Ethernet connection. A raw data stream from a sensor can be split 606 into frames and stored as payload in packets. The raw data streams from additional sensor can be split into frames and stored as payload in additional packets. The frames can be generated by multiple devices, such as FPGAs or ASICs. The header information can be applied 608 to the packets. Additional information, such as metadata, can also be included in the packets. One or more different portions of the header information can be applied to individual packets. A timestamp can be included 610 in the final packet of individual frames of the raw data. The final packet can indicate to the destination device that the complete frame has been delivered and can be consumed. The packets can be transmitted 612 over a RDMA connection to the host device for the frames to be written directly to memory. The packets may include the required information for transmission over a RDMA connection. The frames may be processed on the memory of the destination device, such as by a GPU or a CPU.

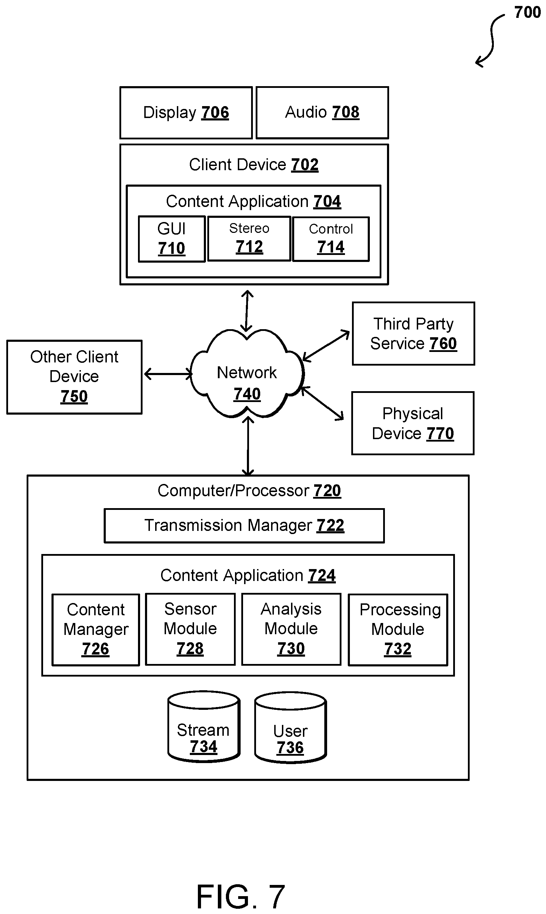

FIG. 7 illustrates an example network configuration 700 of components that can be used to implement aspects of various embodiments, such as to provide, generate, modify, encode, process, fuse, and/or transmit generated image data, calculated measurements, or other such content. In at least one embodiment, a client device 702 can generate or receive data for a session using components of a content application 704 on the client device 702 and data stored locally on that client device 702. In at least one embodiment, a content application 724 executing on a computer or processor 720 (e.g., a cloud server or control system) may initiate a session associated with at least one client device 702 (e.g., a vehicle or robot), as may use a session manager and user data stored in a user database 736, and can cause content such as a sensor streams to be selected and/or retrieved from a stream repository 734 to be used by a processing module 732 to calculate one or more performance metrics for a sensor streaming module 728, which can provide sensor streaming or related data to an analysis module 730 to determine relevant information in an environment where the sensor streams are to be used to determine appropriate operation. A content manager 726 may work with at these various modules to perform testing and analysis, and potentially instruct any actions to be taken in response to a performance metric failing to satisfy an operational requirements. At least a portion of this data or instructional content can be transmitted to the client device 702 and/or a physical device 770 using an appropriate transmission manager 722 to send by download, streaming, or another such transmission channel. An encoder may be used to encode and/or compress at least some of this data before transmitting to the client device 702. In at least one embodiment, the client device 702 receiving such content can provide this content to a corresponding content application 704, which may also or alternatively include a graphical user interface 710, sensor streaming or analysis module 712, and a control module 714 for use in providing, synthesizing, rendering, compositing, modifying, or using content for presentation, navigation, control, (or other purposes) on or by the client device 702, such as may be transmitted to the physical device 770. In some embodiments, the computer/processor 720 and client device 702 may be able to communicate directly without needing to transmit data over a network 740, in order to avoid issues with latency and availability, etc.. A decoder may also be used to decode data received over the network 740 for presentation via client device 702, such as imaging content or performance metrics through a display device 706 and audio, such as corresponding sounds or synthesized speech, through at least one audio playback device 708, such as speakers or headphones. In at least one embodiment, at least some of this content may already be stored on, rendered on, or accessible to client device 702 such that transmission over a network 740 is not required for at least that portion of content, such as where that content (e.g., map data) may have been previously downloaded or stored locally on a hard drive or optical disk. In at least one embodiment, a transmission mechanism such as data streaming can be used to transfer this content from the computer/processor 720, or user database 736, to the client device 702. In at least one embodiment, at least a portion of this content can be obtained, enhanced, and/or streamed from another source, such as a third party service 760 or other client device 750, that may also include a content application for generating, updating, enhancing, or providing map content. In at least one embodiment, portions of this functionality can be performed using multiple computing devices, or multiple processors within one or more computing devices, such as may include a combination of CPUs and GPUs (Graphics Processing Unit).

In at least some of these examples, client devices can include any appropriate computing devices, as may include a desktop computer, notebook computer, set-top box, streaming device, gaming console, smartphone, tablet computer, VR headset, AR goggles, wearable computer, or a smart television. Each client device can submit a request across at least one wired or wireless network, as may include the Internet, an Ethernet, a local area network (LAN), or a cellular network, among other such options. In this example, these requests can be submitted to an address associated with a cloud provider, who may operate or control one or more electronic resources in a cloud provider environment, such as may include a data center or server farm. In at least one embodiment, the request may be received or processed by at least one edge server, that sits on a network edge and is outside at least one security layer associated with the cloud provider environment. In this way, latency can be reduced by allowing the client devices to interact with servers that are in closer proximity, while also improving security of resources in the cloud provider environment.

In at least one embodiment, such a system can be used for performing sensor streaming operations. In other embodiments, such a system can be used for other purposes, such as for providing sensor streaming content for processing on a destination host test or validate autonomous machine applications, or for performing deep learning operations. In at least one embodiment, such a system can be implemented using an edge device or may incorporate one or more Virtual Machines (VMs). In at least one embodiment, such a system can be implemented at least partially in a data center or at least partially using cloud computing resources.

### DATA CENTER

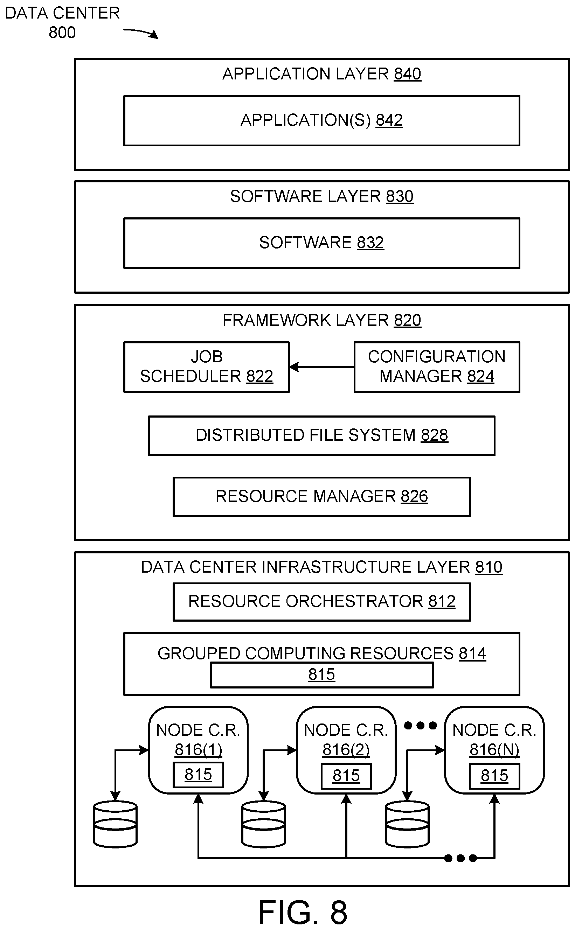

FIG. 8 illustrates an example data center 800, in which at least one embodiment may be used. In at least one embodiment, data center 800 includes a data center infrastructure layer 810, a framework layer 820, a software layer 830 and an application layer 840.

In at least one embodiment, as shown in FIG. 8, data center infrastructure layer 810 may include a resource orchestrator 812, grouped computing resources 814, and node computing resources ("node C.R.s") 816(1)-816(N), where "N" represents a positive integer (which may be a different integer "N" than used in other figures). In at least one embodiment, node C.R.s 816(1)-816(N) may include, but are not limited to, any number of central processing units ("CPUs") or other processors (including accelerators, field programmable gate arrays (FPGAs), graphics processors, etc.), memory storage devices 818(1)-818(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 816(1)-816(N) may be a server having one or more of above-mentioned computing resources.

In at least one embodiment, grouped computing resources 814 may include separate groupings of node C.R.s housed within one or more racks (not shown), or many racks housed in data centers at various geographical locations (also not shown). In at least one embodiment, separate groupings of node C.R.s within grouped computing resources 814 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 812 may configure or otherwise control one or more node C.R.s 816(1)-816(N) and/or grouped computing resources 814. In at least one embodiment, resource orchestrator 812 may include a software design infrastructure ("SDI") management entity for data center 800. In at least one embodiment, resource orchestrator 812 may include hardware, software or some combination thereof.

In at least one embodiment, as shown in FIG. 8, framework layer 820 includes a job scheduler 822, a configuration manager 824, a resource manager 826 and a distributed file system 828. In at least one embodiment, framework layer 820 may include a framework to support software 832 of software layer 830 and/or one or more application(s) 842 of application layer 840. In at least one embodiment, software 832 or application(s) 842 may respectively include web-based service software or applications, such as those provided by Amazon Web Services, Google Cloud and Microsoft Azure. In at least one embodiment, framework layer 820 may be, but is not limited to, a type of free and open-source software web application framework such as Apache Spark^{™} (hereinafter "Spark") that may use distributed file system 828 for large-scale data processing (e.g., "big data"). In at least one embodiment, job scheduler 822 may include a Spark driver to facilitate scheduling of workloads supported by various layers of data center 800. In at least one embodiment, configuration manager 824 may be capable of configuring different layers such as software layer 830 and framework layer 820 including Spark and distributed file system 828 for supporting large-scale data processing. In at least one embodiment, resource manager 826 may be capable of managing clustered or grouped computing resources mapped to or allocated for support of distributed file system 828 and job scheduler 822. In at least one embodiment, clustered or grouped computing resources may include grouped computing resources 814 at data center infrastructure layer 810. In at least one embodiment, resource manager 826 may coordinate with resource orchestrator 812 to manage these mapped or allocated computing resources.

In at least one embodiment, software 832 included in software layer 830 may include software used by at least portions of node C.R.s 816(1)-816(N), grouped computing resources 814, and/or distributed file system 828 of framework layer 820. In at least one embodiment, one or more types of software may include, but are not limited to, Internet web page search software, e-mail virus scan software, database software, and streaming video content software.

In at least one embodiment, application(s) 842 included in application layer 840 may include one or more types of applications used by at least portions of node C.R.s 816(1)-816(N), grouped computing resources 814, and/or distributed file system 828 of framework layer 820. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 824, resource manager 826, and resource orchestrator 812 may implement any number and type of self-modifying actions based on any amount and type of data acquired in any technically feasible fashion. In at least one embodiment, self-modifying actions may relieve a data center operator of data center 800 from making possibly bad configuration decisions and possibly avoiding underused and/or poor performing portions of a data center.

In at least one embodiment, data center 800 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 800. In at least one embodiment, trained machine learning models corresponding to one or more neural networks may be used to infer or predict information using resources described above with respect to data center 800 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 815 are used to perform inferencing and/or training operations associated with one or more embodiments. In at least one embodiment, inference and/or training logic 815 may be used in system FIG. 8 for inferencing or predicting operations based, at least in part, on weight parameters calculated using neural network training operations, neural network functions and/or architectures, or neural network use cases described herein.

Embodiments presented herein can transmit sensor data stream from a remote device over a host device established RDMA connection.

### COMPUTER SYSTEMS

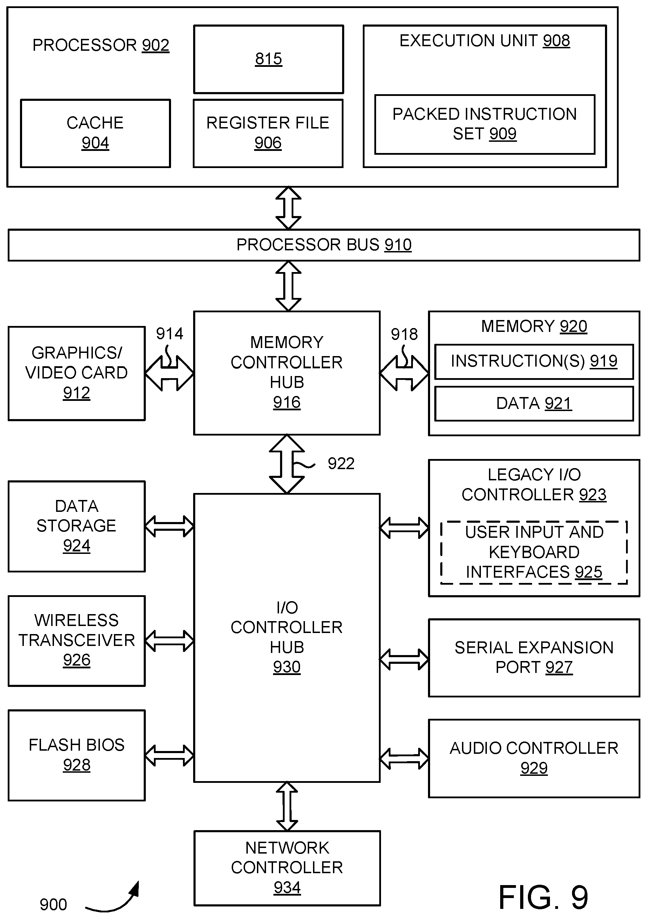

FIG. 9 is a block diagram illustrating an exemplary computer system, which may be a system with interconnected devices and components, a system-on-a-chip (SOC) or some combination thereof formed with a processor that may include execution units to execute an instruction, according to at least one embodiment. In at least one embodiment, a computer system 900 may include, without limitation, a component, such as a processor 902 to employ execution units including logic to perform algorithms for process data, in accordance with present disclosure, such as in embodiment described herein. In at least one embodiment, computer system 900 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 900 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 900 may include, without limitation, processor 902 that may include, without limitation, one or more execution units 908 to perform machine learning model training and/or inferencing according to techniques described herein. In at least one embodiment, computer system 900 is a single processor desktop or server system, but in another embodiment, computer system 900 may be a multiprocessor system. In at least one embodiment, processor 902 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 902 may be coupled to a processor bus 910 that may transmit data signals between processor 902 and other components in computer system 900.

In at least one embodiment, processor 902 may include, without limitation, a Level 1 ("L1") internal cache memory ("cache") 904. In at least one embodiment, processor 902 may have a single internal cache or multiple levels of internal cache. In at least one embodiment, cache memory may reside external to processor 902. Other embodiments may also include a combination of both internal and external caches depending on particular implementation and needs. In at least one embodiment, a register file 906 may store different types of data in various registers including, without limitation, integer registers, floating point registers, status registers, and an instruction pointer register.

In at least one embodiment, execution unit 908, including, without limitation, logic to perform integer and floating point operations, also resides in processor 902. In at least one embodiment, processor 902 may also include a microcode ("ucode") read only memory ("ROM") that stores microcode for certain macro instructions. In at least one embodiment, execution unit 908 may include logic to handle a packed instruction set 909. In at least one embodiment, by including packed instruction set 909 in an instruction set of a general-purpose processor, along with associated circuitry to execute instructions, operations used by many multimedia applications may be performed using packed data in processor 902. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, execution unit 908 may also be used in microcontrollers, embedded processors, graphics devices, DSPs, and other types of logic circuits. In at least one embodiment, computer system 900 may include, without limitation, a memory 920. In at least one embodiment, memory 920 may be a Dynamic Random Access Memory ("DRAM") device, a Static Random Access Memory ("SRAM") device, a flash memory device, or another memory device. In at least one embodiment, memory 920 may store instruction(s) 919 and/or data 921 represented by data signals that may be executed by processor 902.

In at least one embodiment, a system logic chip may be coupled to processor bus 910 and memory 920. In at least one embodiment, a system logic chip may include, without limitation, a memory controller hub ("MCH") 916, and processor 902 may communicate with MCH 916 via processor bus 910. In at least one embodiment, MCH 916 may provide a high bandwidth memory path 918 to memory 920 for instruction and data storage and for storage of graphics commands, data, and textures. In at least one embodiment, MCH 916 may direct data signals between processor 902, memory 920, and other components in computer system 900 and to bridge data signals between processor bus 910, memory 920, and a system I/O interface 922. In at least one embodiment, a system logic chip may provide a graphics port for coupling to a graphics controller. In at least one embodiment, MCH 916 may be coupled to memory 920 through high bandwidth memory path 918 and a graphics/video card 912 may be coupled to MCH 916 through an Accelerated Graphics Port ("AGP") interconnect 914.

In at least one embodiment, computer system 900 may use system I/O interface 922 as a proprietary hub interface bus to couple MCH 916 to an I/O controller hub ("ICH") 930. In at least one embodiment, ICH 930 may provide direct connections to some I/O devices via a local I/O bus. In at least one embodiment, a local I/O bus may include, without limitation, a high-speed I/O bus for connecting peripherals to memory 920, a chipset, and processor 902. Examples may include, without limitation, an audio controller 929, a firmware hub ("flash BIOS") 928, a wireless transceiver 926, a data storage 924, a legacy I/O controller 923 containing user input and keyboard interfaces 925, a serial expansion port 927, such as a Universal Serial Bus ("USB") port, and a network controller 934. In at least one embodiment, data storage 924 may comprise a hard disk drive, a floppy disk drive, a CD-ROM device, a flash memory device, or other mass storage device.

In at least one embodiment, FIG. 9 illustrates a system, which includes interconnected hardware devices or "chips", whereas in other embodiments, FIG. 9 may illustrate an exemplary SoC. In at least one embodiment, devices illustrated in FIG. 9 may be interconnected with proprietary interconnects, standardized interconnects (e.g., PCIe) or some combination thereof. In at least one embodiment, one or more components of computer system 900 are interconnected using compute express link (CXL) interconnects.

Inference and/or training logic 815 are used to perform inferencing and/or training operations associated with one or more embodiments. In at least one embodiment, inference and/or training logic 815 may be used in system FIG. 9 for inferencing or predicting operations based, at least in part, on weight parameters calculated using neural network training operations, neural network functions and/or architectures, or neural network use cases described herein.

Embodiments presented herein can transmit sensor data stream from a remote device over a host device established RDMA connection.

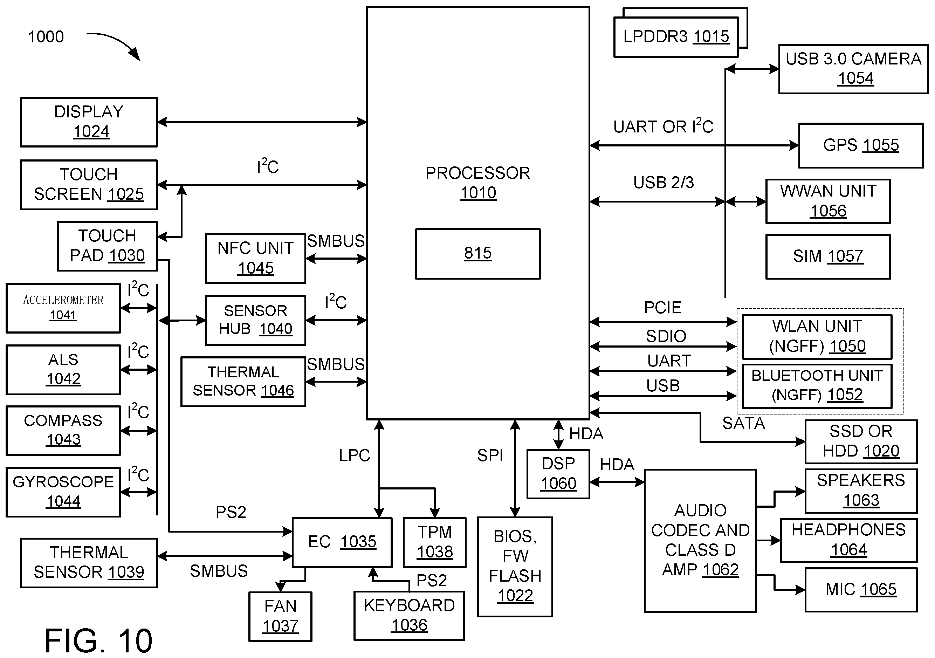

FIG. 10 is a block diagram illustrating an electronic device 1000 for using a processor 1010, according to at least one embodiment. In at least one embodiment, electronic device 1000 may be, for example and without limitation, a notebook, a tower server, a rack server, a blade server, a laptop, a desktop, a tablet, a mobile device, a phone, an embedded computer, or any other suitable electronic device.

In at least one embodiment, electronic device 1000 may include, without limitation, processor 1010 communicatively coupled to any suitable number or kind of components, peripherals, modules, or devices. In at least one embodiment, processor 1010 is coupled using a bus or interface, such as a I²C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3, etc.), or a Universal Asynchronous Receiver/Transmitter ("UART") bus. In at least one embodiment, FIG. 10 illustrates a system, which includes interconnected hardware devices or "chips", whereas in other embodiments, FIG. 10 may illustrate an exemplary SoC. In at least one embodiment, devices illustrated in FIG. 10 may be interconnected with proprietary interconnects, standardized interconnects (e.g., PCIe) or some combination thereof. In at least one embodiment, one or more components of FIG. 10 are interconnected using compute express link (CXL) interconnects.

In at least one embodiment, FIG 10 may include a display 1024, a touch screen 1025, a touch pad 1030, a Near Field Communications unit ("NFC") 1045, a sensor hub 1040, a thermal sensor 1046, an Express Chipset ("EC") 1035, a Trusted Platform Module ("TPM") 1038, BIOS/firmware/flash memory ("BIOS, FW Flash") 1022, a DSP 1060, a drive 1020 such as a Solid State Disk ("SSD") or a Hard Disk Drive ("HDD"), a wireless local area network unit ("WLAN") 1050, a Bluetooth unit 1052, a Wireless Wide Area Network unit ("WWAN") 1056, a Global Positioning System (GPS) unit 1055, a camera ("USB 3.0 camera") 1054 such as a USB 3.0 camera, and/or a Low Power Double Data Rate ("LPDDR") memory unit ("LPDDR3") 1015 implemented in, for example, an LPDDR3 standard. These components may each be implemented in any suitable manner.

In at least one embodiment, other components may be communicatively coupled to processor 1010 through components described herein. In at least one embodiment, an accelerometer 1041, an ambient light sensor ("ALS") 1042, a compass 1043, and a gyroscope 1044 may be communicatively coupled to sensor hub 1040. In at least one embodiment, a thermal sensor 1039, a fan 1037, a keyboard 1036, and touch pad 1030 may be communicatively coupled to EC 1035. In at least one embodiment, speakers 1063, headphones 1064, and a microphone ("mic") 1065 may be communicatively coupled to an audio unit ("audio codec and class D amp") 1062, which may in turn be communicatively coupled to DSP 1060. In at least one embodiment, audio unit 1062 may include, for example and without limitation, an audio coder/decoder ("codec") and a class D amplifier. In at least one embodiment, a SIM card ("SIM") 1057 may be communicatively coupled to WWAN unit 1056. In at least one embodiment, components such as WLAN unit 1050 and Bluetooth unit 1052, as well as WWAN unit 1056 may be implemented in a Next Generation Form Factor ("NGFF").

Inference and/or training logic 815 are used to perform inferencing and/or training operations associated with one or more embodiments. In at least one embodiment, inference and/or training logic 815 may be used in system FIG. 10 for inferencing or predicting operations based, at least in part, on weight parameters calculated using neural network training operations, neural network functions and/or architectures, or neural network use cases described herein.

Embodiments presented herein can transmit sensor data stream from a remote device over a host device established RDMA connection.

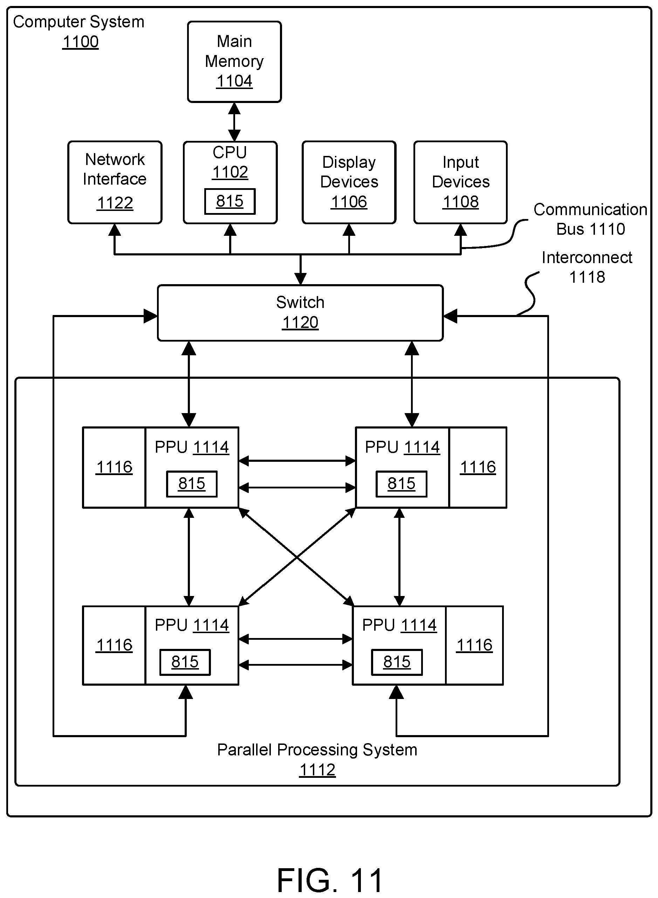

FIG. 11 illustrates a computer system 1100, according to at least one embodiment. In at least one embodiment, computer system 1100 is configured to implement various processes and methods described throughout this disclosure.

In at least one embodiment, computer system 1100 comprises, without limitation, at least one central processing unit ("CPU") 1102 that is connected to a communication bus 1110 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 1100 includes, without limitation, a main memory 1104 and control logic (e.g., implemented as hardware, software, or a combination thereof) and data are stored in main memory 1104, which may take form of random access memory ("RAM"). In at least one embodiment, a network interface subsystem ("network interface") 1122 provides an interface to other computing devices and networks for receiving data from and transmitting data to other systems with computer system 1100.

In at least one embodiment, computer system 1100, in at least one embodiment, includes, without limitation, input devices 1108, a parallel processing system 1112, and display devices 1106 that can be implemented using a conventional cathode ray tube ("CRT"), a liquid crystal display ("LCD"), a light emitting diode ("LED") display, a plasma display, or other suitable display technologies. In at least one embodiment, user input is received from input devices 1108 such as keyboard, mouse, touchpad, microphone, etc. In at least one embodiment, each module described herein can be situated on a single semiconductor platform to form a processing system.

Inference and/or training logic 815 are used to perform inferencing and/or training operations associated with one or more embodiments. In at least one embodiment, inference and/or training logic 815 may be used in system FIG. 11 for inferencing or predicting operations based, at least in part, on weight parameters calculated using neural network training operations, neural network functions and/or architectures, or neural network use cases described herein.

Embodiments presented herein can transmit sensor data stream from a remote device over a host device established RDMA connection.

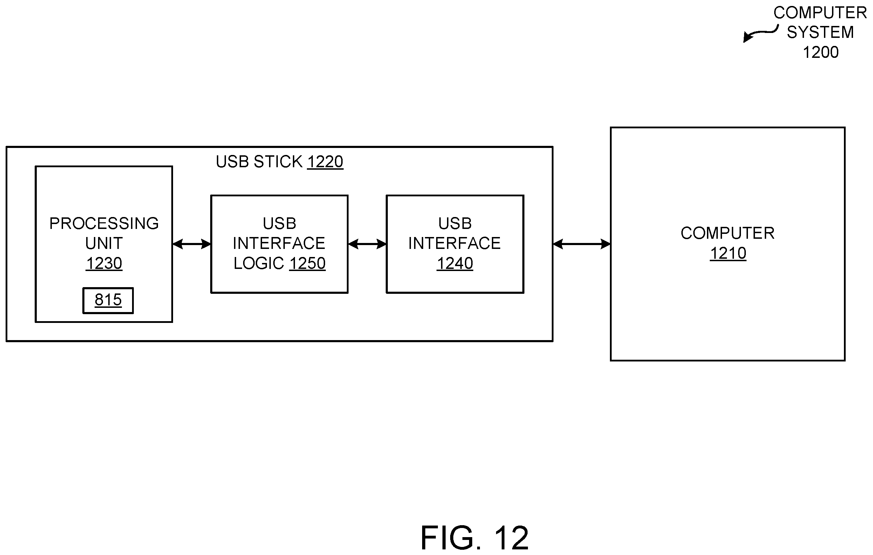

FIG. 12 illustrates a computer system 1200, according to at least one embodiment. In at least one embodiment, computer system 1200 includes, without limitation, a computer 1210 and a USB stick 1220. In at least one embodiment, computer 1210 may include, without limitation, any number and type of processor(s) (not shown) and a memory (not shown). In at least one embodiment, computer 1210 includes, without limitation, a server, a cloud instance, a laptop, and a desktop computer.

In at least one embodiment, USB stick 1220 includes, without limitation, a processing unit 1230, a USB interface 1240, and USB interface logic 1250. In at least one embodiment, processing unit 1230 may be any instruction execution system, apparatus, or device capable of executing instructions. In at least one embodiment, processing unit 1230 may include, without limitation, any number and type of processing cores (not shown). In at least one embodiment, processing unit 1230 comprises an application specific integrated circuit ("ASIC") that is optimized to perform any amount and type of operations associated with machine learning. For instance, in at least one embodiment, processing unit 1230 is a tensor processing unit ("TPC") that is optimized to perform machine learning inference operations. In at least one embodiment, processing unit 1230 is a vision processing unit ("VPU") that is optimized to perform machine vision and machine learning inference operations.

In at least one embodiment, USB interface 1240 may be any type of USB connector or USB socket. For instance, in at least one embodiment, USB interface 1240 is a USB 3.0 Type-C socket for data and power. In at least one embodiment, USB interface 1240 is a USB 3.0 Type-A connector. In at least one embodiment, USB interface logic 1250 may include any amount and type of logic that enables processing unit 1230 to interface with devices (e.g., computer 1210) via USB connector 1240.

Inference and/or training logic 815 are used to perform inferencing and/or training operations associated with one or more embodiments. In at least one embodiment, inference and/or training logic 815 may be used in system FIG. 12 for inferencing or predicting operations based, at least in part, on weight parameters calculated using neural network training operations, neural network functions and/or architectures, or neural network use cases described herein.

Embodiments presented herein can transmit sensor data stream from a remote device over a host device established RDMA connection.

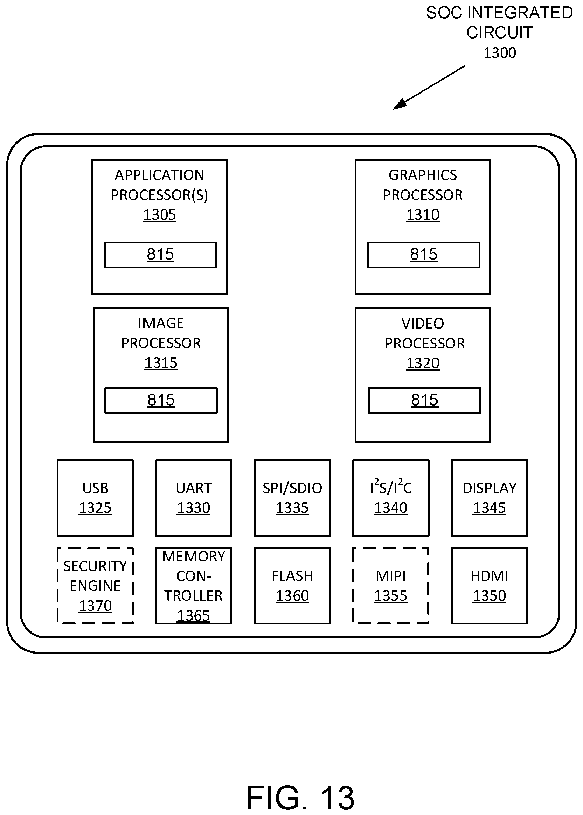

FIG. 13 illustrates exemplary integrated circuits and associated graphics processors that may be fabricated using one or more IP cores, according to various embodiments described herein. In addition to what is illustrated, other logic and circuits may be included in at least one embodiment, including additional graphics processors/cores, peripheral interface controllers, or general-purpose processor cores.

FIG. 13 is a block diagram illustrating an exemplary system-on-a-chip (SOC) integrated circuit 1300 that may be fabricated using one or more IP cores, according to at least one embodiment. In at least one embodiment, SOC integrated circuit 1300 includes one or more application processor(s) 1305 (e.g., CPUs), at least one graphics processor 1310, and may additionally include an image processor 1315 and/or a video processor 1320, any of which may be a modular IP core. In at least one embodiment, SOC integrated circuit 1300 includes peripheral or bus logic including a USB controller 1325, a UART controller 1330, an SPI/SDIO controller 1335, and an I²2S/I²2C controller 1340. In at least one embodiment, SOC integrated circuit 1300 can include a display device 1345 coupled to one or more of a high-definition multimedia interface (HDMI) controller 1350 and a mobile industry processor interface (MIPI) display interface 1355. In at least one embodiment, storage may be provided by a flash memory subsystem 1360 including flash memory and a flash memory controller. In at least one embodiment, a memory interface may be provided via a memory controller 1365 for access to SDRAM or SRAM memory devices. In at least one embodiment, some integrated circuits additionally include an embedded security engine 1370.

Inference and/or training logic 815 are used to perform inferencing and/or training operations associated with one or more embodiments. In at least one embodiment, inference and/or training logic 815 may be used in SOC integrated circuit 1300 for inferencing or predicting operations based, at least in part, on weight parameters calculated using neural network training operations, neural network functions and/or architectures, or neural network use cases described herein.

Embodiments presented herein can transmit sensor data stream from a remote device over a host device established RDMA connection.

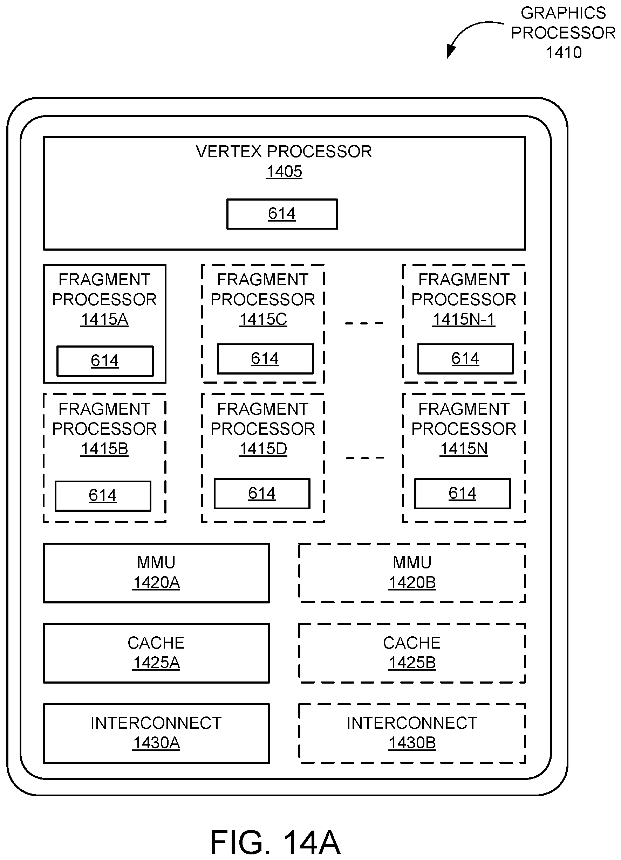

FIGS. 14A-14B illustrate exemplary integrated circuits and associated graphics processors that may be fabricated using one or more IP cores, according to various embodiments described herein. In addition to what is illustrated, other logic and circuits may be included in at least one embodiment, including additional graphics processors/cores, peripheral interface controllers, or general-purpose processor cores.

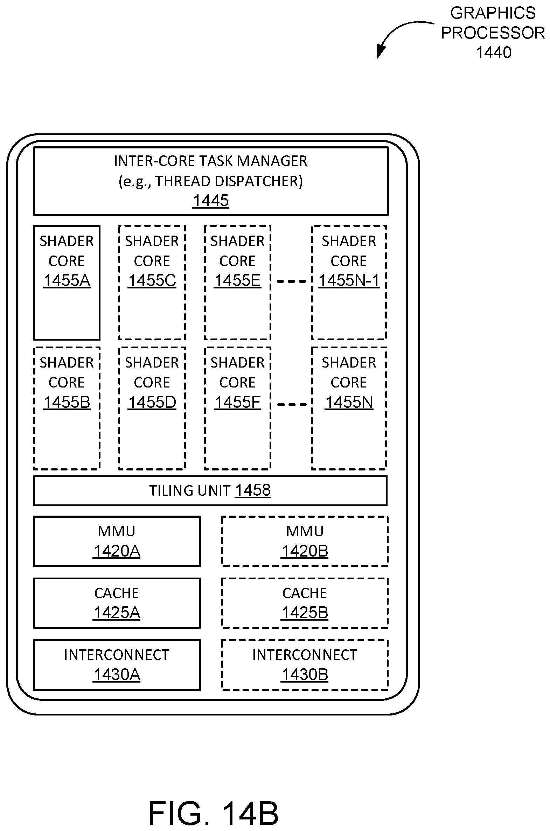

FIGS. 14A-14B are block diagrams illustrating exemplary graphics processors for use within an SoC, according to embodiments described herein. FIG. 14A illustrates an exemplary graphics processor 1410 of a system on a chip integrated circuit that may be fabricated using one or more IP cores, according to at least one embodiment. FIG. 14B illustrates an additional exemplary graphics processor 1440 of a system on a chip integrated circuit that may be fabricated using one or more IP cores, according to at least one embodiment. In at least one embodiment, graphics processor 1410 of FIG. 14A is a low power graphics processor core. In at least one embodiment, graphics processor 1440 of FIG. 14B is a higher performance graphics processor core. In at least one embodiment, each of graphics processors 1410, 1440 can be variants of computer system 1200 of FIG. 12.

In at least one embodiment, graphics processor 1410 includes a vertex processor 1405 and one or more fragment processor(s) 1415A-1415N (e.g., 1415A, 1415B, 1415C, 1415D, through 1415N-1, and 1415N). In at least one embodiment, graphics processor 1410 can execute different shader programs via separate logic, such that vertex processor 1405 is optimized to execute operations for vertex shader programs, while one or more fragment processor(s) 1415A-1415N execute fragment (e.g., pixel) shading operations for fragment or pixel shader programs. In at least one embodiment, vertex processor 1405 performs a vertex processing stage of a 3D graphics pipeline and generates primitives and vertex data. In at least one embodiment, fragment processor(s) 1415A-1415N use primitive and vertex data generated by vertex processor 1405 to produce a framebuffer that is displayed on a display device. In at least one embodiment, fragment processor(s) 1415A-1415N are optimized to execute fragment shader programs as provided for in an OpenGL API, which may be used to perform similar operations as a pixel shader program as provided for in a Direct 3D API.

In at least one embodiment, graphics processor 1410 additionally includes one or more memory management units (MMUs) 1420A-1420B, cache(s) 1425A-1425B, and circuit interconnect(s) 1430A-1430B. In at least one embodiment, one or more MMU(s) 1420A-1420B provide for virtual to physical address mapping for graphics processor 1410, including for vertex processor 1405 and/or fragment processor(s) 1415A-1415N, which may reference vertex or image/texture data stored in memory, in addition to vertex or image/texture data stored in one or more cache(s) 1425A-1425B. In at least one embodiment, one or more MMU(s) 1420A-1420B may be synchronized with other MMUs within a system, including one or more MMUs associated with one or more application processor(s) 1405, image processors 1415, and/or video processors 1420 of FIG. 14A, such that each processor 1405-1420 can participate in a shared or unified virtual memory system. In at least one embodiment, one or more circuit interconnect(s) 1430A-1430B enable graphics processor 1410 to interface with other IP cores within SoC, either via an internal bus of SoC or via a direct connection.

In at least one embodiment, graphics processor 1440 includes one or more shader core(s) 1455A-1455N (e.g., 1455A, 1455B, 1455C, 1455D, 1455E, 1455F, through 1455N-1, and 1455N) as shown in FIG. 14B, which provides for a unified shader core architecture in which a single core or type or core can execute all types of programmable shader code, including shader program code to implement vertex shaders, fragment shaders, and/or compute shaders. In at least one embodiment, a number of shader cores can vary. In at least one embodiment, graphics processor 1440 includes an inter-core task manager 1445, which acts as a thread dispatcher to dispatch execution threads to one or more shader cores 1455A-1455N and a tiling unit 1458 to accelerate tiling operations for tile-based rendering, in which rendering operations for a scene are subdivided in image space, for example to exploit local spatial coherence within a scene or to optimize use of internal caches.

Embodiments presented herein can transmit sensor data stream from a remote device over a host device established RDMA connection.

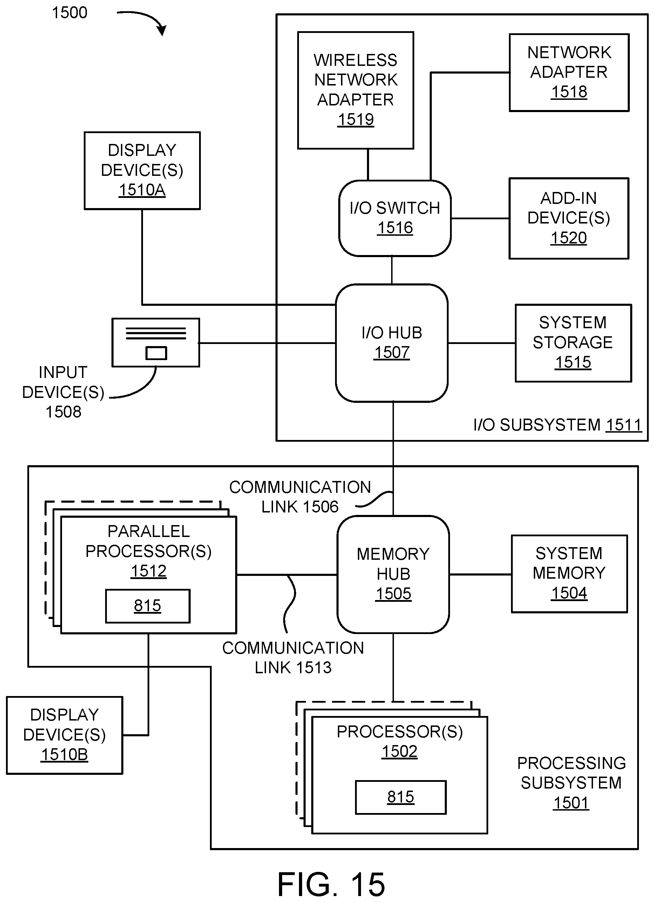

FIG. 15 is a block diagram illustrating a computing system 1500 according to at least one embodiment. In at least one embodiment, computing system 1500 includes a processing subsystem 1501 having one or more processor(s) 1502 and a system memory 1504 communicating via an interconnection path that may include a memory hub 1505. In at least one embodiment, memory hub 1505 may be a separate component within a chipset component or may be integrated within one or more processor(s) 1502. In at least one embodiment, memory hub 1505 couples with an I/O subsystem 1511 via a communication link 1506. In at least one embodiment, I/O subsystem 1511 includes an I/O hub 1507 that can enable computing system 1500 to receive input from one or more input device(s) 1508. In at least one embodiment, I/O hub 1507 can enable a display controller, which may be included in one or more processor(s) 1502, to provide outputs to one or more display device(s) 1510A. In at least one embodiment, one or more display device(s) 1510A coupled with I/O hub 1507 can include a local, internal, or embedded display device.

In at least one embodiment, processing subsystem 1501 includes one or more parallel processor(s) 1512 coupled to memory hub 1505 via a bus or other communication link 1513. In at least one embodiment, communication link 1513 may use one of any number of standards based communication link technologies or protocols, such as but not limited to PCI Express, or may be a vendor-specific communications interface or communications fabric. In at least one embodiment, one or more parallel processor(s) 1512 form a computationally focused parallel or vector processing system that can include a large number of processing cores and/or processing clusters, such as a many-integrated core (MIC) processor. In at least one embodiment, some or all of parallel processor(s) 1512 form a graphics processing subsystem that can output pixels to one of one or more display device(s) 1510A coupled via I/O hub 1507. In at least one embodiment, parallel processor(s) 1512 can also include a display controller and display interface (not shown) to enable a direct connection to one or more display device(s) 1510B. In at least one embodiment, parallel processor(s) 1512 include one or more cores, such as graphics cores 1500 discussed herein.

In at least one embodiment, a system storage unit 1514 can connect to I/O hub 1507 to provide a storage mechanism for computing system 1500. In at least one embodiment, an I/O switch 1516 can be used to provide an interface mechanism to enable connections between I/O hub 1507 and other components, such as a network adapter 1518 and/or a wireless network adapter 1519 that may be integrated into platform, and various other devices that can be added via one or more add-in device(s) 1520. In at least one embodiment, network adapter 1518 can be an Ethernet adapter or another wired network adapter. In at least one embodiment, wireless network adapter 1519 can include one or more of a Wi-Fi, Bluetooth, near field communication (NFC), or other network device that includes one or more wireless radios.

In at least one embodiment, computing system 1500 can include other components not explicitly shown, including USB or other port connections, optical storage drives, video capture devices, and like, may also be connected to I/O hub 1507. In at least one embodiment, communication paths interconnecting various components in FIG. 15 may be implemented using any suitable protocols, such as PCI (Peripheral Component Interconnect) based protocols (e.g., PCI-Express), or other bus or point-to-point communication interfaces and/or protocol(s), such as NV-Link high-speed interconnect, or interconnect protocols.

In at least one embodiment, parallel processor(s) 1512 incorporate circuitry optimized for graphics and video processing, including, for example, video output circuitry, and constitutes a graphics processing unit (GPU), e.g., parallel processor(s) 1512 includes graphics core 1500. In at least one embodiment, parallel processor(s) 1512 incorporate circuitry optimized for general purpose processing. In at least embodiment, components of computing system 1500 may be integrated with one or more other system elements on a single integrated circuit. For example, in at least one embodiment, parallel processor(s) 1512, memory hub 1505, processor(s) 1502, and I/O hub 1507 can be integrated into a system on chip (SoC) integrated circuit. In at least one embodiment, components of computing system 1500 can be integrated into a single package to form a system in package (SIP) configuration. In at least one embodiment, at least a portion of components of computing system 1500 can be integrated into a multi-chip module (MCM), which can be interconnected with other multi-chip modules into a modular computing system.

Inference and/or training logic 815 are used to perform inferencing and/or training operations associated with one or more embodiments. In at least one embodiment, inference and/or training logic 815 may be used in system FIG. 15 for inferencing or predicting operations based, at least in part, on weight parameters calculated using neural network training operations, neural network functions and/or architectures, or neural network use cases described herein.

Embodiments presented herein can transmit sensor data stream from a remote device over a host device established RDMA connection.

### PROCESSORS

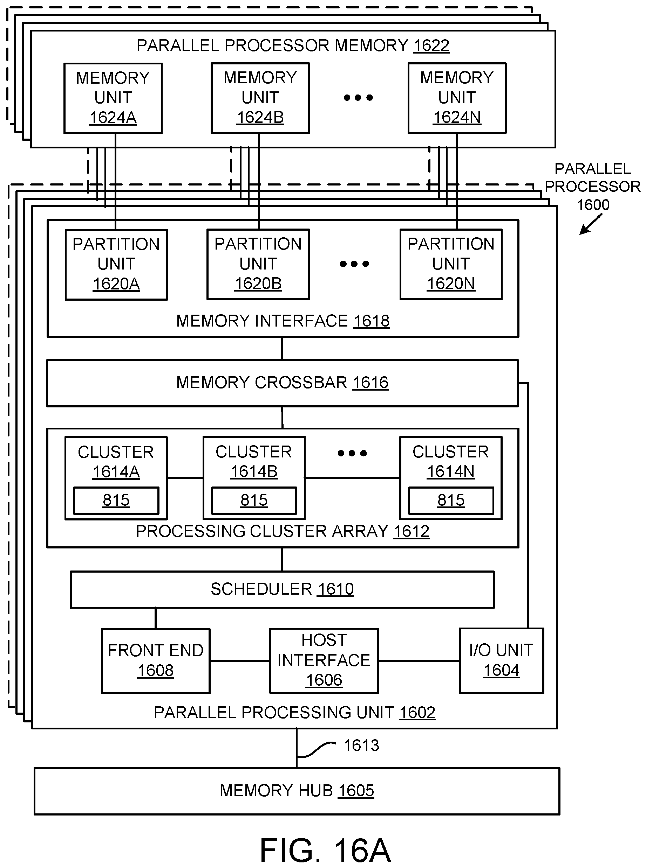

FIG. 16A illustrates a parallel processor 1600 according to at least one embodiment. In at least one embodiment, various components of parallel processor 1600 may be implemented using one or more integrated circuit devices, such as programmable processors, application specific integrated circuits (ASICs), or field programmable gate arrays (FPGA). In at least one embodiment, illustrated parallel processor 1600 is a variant of one or more parallel processor(s) 1512 shown in FIG. 15 according to an exemplary embodiment. In at least one embodiment, a parallel processor 1600 includes one or more graphics cores 1500.

In at least one embodiment, parallel processor 1600 includes a parallel processing unit 1602. In at least one embodiment, parallel processing unit 1602 includes an I/O unit 1604 that enables communication with other devices, including other instances of parallel processing unit 1602. In at least one embodiment, I/O unit 1604 may be directly connected to other devices. In at least one embodiment, I/O unit 1604 connects with other devices via use of a hub or switch interface, such as a memory hub 1605. In at least one embodiment, connections between memory hub 1605 and I/O unit 1604 form a communication link 1613. In at least one embodiment, I/O unit 1604 connects with a host interface 1606 and a memory crossbar 1616, where host interface 1606 receives commands directed to performing processing operations and memory crossbar 1616 receives commands directed to performing memory operations.

In at least one embodiment, when host interface 1606 receives a command buffer via I/O unit 1604, host interface 1606 can direct work operations to perform those commands to a front end 1608. In at least one embodiment, front end 1608 couples with a scheduler 1610 (which may be referred to as a sequencer), which is configured to distribute commands or other work items to a processing cluster array 1612. In at least one embodiment, scheduler 1610 ensures that processing cluster array 1612 is properly configured and in a valid state before tasks are distributed to a cluster of processing cluster array 1612. In at least one embodiment, scheduler 1610 is implemented via firmware logic executing on a microcontroller. In at least one embodiment, microcontroller implemented scheduler 1610 is configurable to perform complex scheduling and work distribution operations at coarse and fine granularity, enabling rapid preemption and context switching of threads executing on processing array 1612. In at least one embodiment, host software can prove workloads for scheduling on processing cluster array 1612 via one of multiple graphics processing paths. In at least one embodiment, workloads can then be automatically distributed across processing array cluster 1612 by scheduler 1610 logic within a microcontroller including scheduler 1610.

In at least one embodiment, processing cluster array 1612 can include up to "N" processing clusters (e.g., cluster 1614A, cluster 1614B, through cluster 1614N), where "N" represents a positive integer (which may be a different integer "N" than used in other figures). In at least one embodiment, each cluster 1614A-1614N of processing cluster array 1612 can execute a large number of concurrent threads. In at least one embodiment, scheduler 1610 can allocate work to clusters 1614A-1614N of processing cluster array 1612 using various scheduling and/or work distribution algorithms, which may vary depending on workload arising for each type of program or computation. In at least one embodiment, scheduling can be handled dynamically by scheduler 1610, or can be assisted in part by compiler logic during compilation of program logic configured for execution by processing cluster array 1612. In at least one embodiment, different clusters 1614A-1614N of processing cluster array 1612 can be allocated for processing different types of programs or for performing different types of computations.

In at least one embodiment, processing cluster array 1612 can be configured to perform various types of parallel processing operations. In at least one embodiment, processing cluster array 1612 is configured to perform general-purpose parallel compute operations. For example, in at least one embodiment, processing cluster array 1612 can include logic to execute processing tasks including filtering of video and/or audio data, performing modeling operations, including physics operations, and performing data transformations.

In at least one embodiment, processing cluster array 1612 is configured to perform parallel graphics processing operations. In at least one embodiment, processing cluster array 1612 can include additional logic to support execution of such graphics processing operations, including but not limited to, texture sampling logic to perform texture operations, as well as tessellation logic and other vertex processing logic. In at least one embodiment, processing cluster array 1612 can be configured to execute graphics processing related shader programs such as but not limited to, vertex shaders, tessellation shaders, geometry shaders, and pixel shaders. In at least one embodiment, parallel processing unit 1602 can transfer data from system memory via I/O unit 1604 for processing. In at least one embodiment, during processing, transferred data can be stored to on-chip memory (e.g., parallel processor memory 1622) during processing, then written back to system memory.

In at least one embodiment, when parallel processing unit 1602 is used to perform graphics processing, scheduler 1610 can be configured to divide a processing workload into approximately equal sized tasks, to better enable distribution of graphics processing operations to multiple clusters 1614A-1614N of processing cluster array 1612. In at least one embodiment, portions of processing cluster array 1612 can be configured to perform different types of processing. For example, in at least one embodiment, a first portion may be configured to perform vertex shading and topology generation, a second portion may be configured to perform tessellation and geometry shading, and a third portion may be configured to perform pixel shading or other screen space operations, to produce a rendered image for display. In at least one embodiment, intermediate data produced by one or more of clusters 1614A-1614N may be stored in buffers to allow intermediate data to be transmitted between clusters 1614A-1614N for further processing.

In at least one embodiment, processing cluster array 1612 can receive processing tasks to be executed via scheduler 1610, which receives commands defining processing tasks from front end 1608. In at least one embodiment, processing tasks can include indices of data to be processed, e.g., surface (patch) data, primitive data, vertex data, and/or pixel data, as well as state parameters and commands defining how data is to be processed (e.g., what program is to be executed). In at least one embodiment, scheduler 1610 may be configured to fetch indices corresponding to tasks or may receive indices from front end 1608. In at least one embodiment, front end 1608 can be configured to ensure processing cluster array 1612 is configured to a valid state before a workload specified by incoming command buffers (e.g., batch-buffers, push buffers, etc.) is initiated.

In at least one embodiment, each of one or more instances of parallel processing unit 1602 can couple with a parallel processor memory 1622. In at least one embodiment, parallel processor memory 1622 can be accessed via memory crossbar 1616, which can receive memory requests from processing cluster array 1612 as well as I/O unit 1604. In at least one embodiment, memory crossbar 1616 can access parallel processor memory 1622 via a memory interface 1618. In at least one embodiment, memory interface 1618 can include multiple partition units (e.g., partition unit 1620A, partition unit 1620B, through partition unit 1620N) that can each couple to a portion (e.g., memory unit) of parallel processor memory 1622. In at least one embodiment, a number of partition units 1620A-1620N is configured to be equal to a number of memory units, such that a first partition unit 1620A has a corresponding first memory unit 1624A, a second partition unit 1620B has a corresponding memory unit 1624B, and an N-th partition unit 1620N has a corresponding N-th memory unit 1624N. In at least one embodiment, a number of partition units 1620A-1620N may not be equal to a number of memory units.

In at least one embodiment, memory units 1624A-1624N can include various types of memory devices, including dynamic random access memory (DRAM) or graphics random access memory, such as synchronous graphics random access memory (SGRAM), including graphics double data rate (GDDR) memory. In at least one embodiment, memory units 1624A-1624N may also include 3D stacked memory, including but not limited to high bandwidth memory (HBM), HBM2e, or HDM3. In at least one embodiment, render targets, such as frame buffers or texture maps may be stored across memory units 1624A-1624N, allowing partition units 1620A-1620N to write portions of each render target in parallel to efficiently use available bandwidth of parallel processor memory 1622. In at least one embodiment, a local instance of parallel processor memory 1622 may be excluded in favor of a unified memory design that uses system memory in conjunction with local cache memory.

In at least one embodiment, any one of clusters 1614A-1614N of processing cluster array 1612 can process data that will be written to any of memory units 1624A-1624N within parallel processor memory 1622. In at least one embodiment, memory crossbar 1616 can be configured to transfer an output of each cluster 1614A-1614N to any partition unit 1620A-1620N or to another cluster 1614A-1614N, which can perform additional processing operations on an output. In at least one embodiment, each cluster 1614A-1614N can communicate with memory interface 1618 through memory crossbar 1616 to read from or write to various external memory devices. In at least one embodiment, memory crossbar 1616 has a connection to memory interface 1618 to communicate with I/O unit 1604, as well as a connection to a local instance of parallel processor memory 1622, enabling processing units within different processing clusters 1614A-1614N to communicate with system memory or other memory that is not local to parallel processing unit 1602. In at least one embodiment, memory crossbar 1616 can use virtual channels to separate traffic streams between clusters 1614A-1614N and partition units 1620A-1620N.

In at least one embodiment, multiple instances of parallel processing unit 1602 can be provided on a single add-in card, or multiple add-in cards can be interconnected. In at least one embodiment, different instances of parallel processing unit 1602 can be configured to interoperate even if different instances have different numbers of processing cores, different amounts of local parallel processor memory, and/or other configuration differences. For example, in at least one embodiment, some instances of parallel processing unit 1602 can include higher precision floating point units relative to other instances. In at least one embodiment, systems incorporating one or more instances of parallel processing unit 1602 or parallel processor 1600 can be implemented in a variety of configurations and form factors, including but not limited to desktop, laptop, or handheld personal computers, servers, workstations, game consoles, and/or embedded systems.

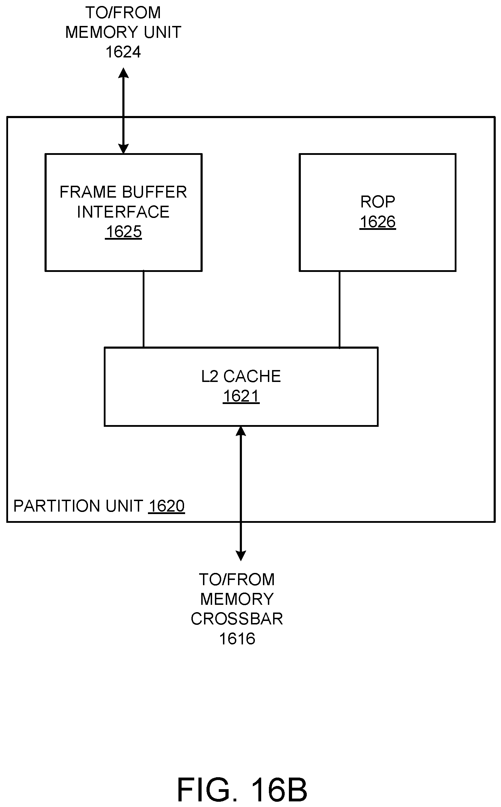

FIG. 16B is a block diagram of a partition unit 1620 according to at least one embodiment. In at least one embodiment, partition unit 1620 is an instance of one of partition units 1620A-1620N of FIG. 16A. In at least one embodiment, partition unit 1620 includes an L2 cache 1621, a frame buffer interface 1625, and a ROP 1626 (raster operations unit). In at least one embodiment, L2 cache 1621 is a read/write cache that is configured to perform load and store operations received from memory crossbar 1616 and ROP 1626. In at least one embodiment, read misses and urgent write-back requests are output by L2 cache 1621 to frame buffer interface 1625 for processing. In at least one embodiment, updates can also be sent to a frame buffer via frame buffer interface 1625 for processing. In at least one embodiment, frame buffer interface 1625 interfaces with one of memory units in parallel processor memory, such as memory units 1624A-1624N of FIG. 16A (e.g., within parallel processor memory 1622).

In at least one embodiment, ROP 1626 is a processing unit that performs raster operations such as stencil, z test, blending, etc. In at least one embodiment, ROP 1626 then outputs processed graphics data that is stored in graphics memory. In at least one embodiment, ROP 1626 includes compression logic to compress depth or color data that is written to memory and decompress depth or color data that is read from memory. In at least one embodiment, compression logic can be lossless compression logic that makes use of one or more of multiple compression algorithms. In at least one embodiment, a type of compression that is performed by ROP 1626 can vary based on statistical characteristics of data to be compressed. For example, in at least one embodiment, delta color compression is performed on depth and color data on a per-tile basis.

In at least one embodiment, ROP 1626 is included within each processing cluster (e.g., cluster 1614A-1614N of FIG. 16A) instead of within partition unit 1620. In at least one embodiment, read and write requests for pixel data are transmitted over memory crossbar 1616 instead of pixel fragment data. In at least one embodiment, processed graphics data may be displayed on a display device, such as one of one or more display device(s) 1510 of FIG. 15, routed for further processing by processor(s) 1602, or routed for further processing by one of processing entities within parallel processor 1600 of FIG. 16A.

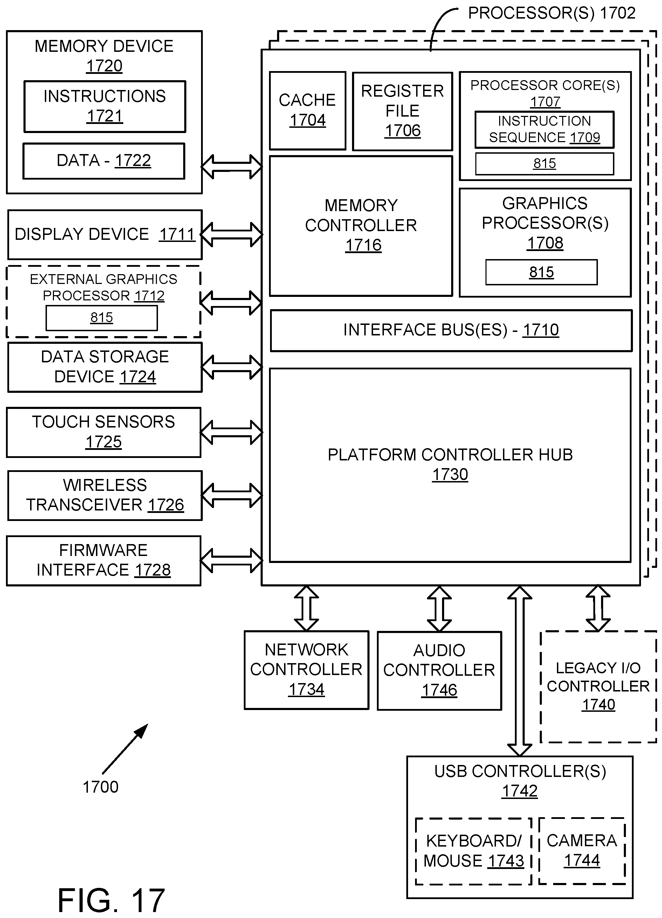

FIG. 17 is a block diagram of a processing system, according to at least one embodiment. In at least one embodiment, system 1700 includes one or more processor(s) 1702 and one or more graphics processor(s) 1708, and may be a single processor desktop system, a multiprocessor workstation system, or a server system having a large number of processor(s) 1702 or processor core(s) 1707. In at least one embodiment, system 1700 is a processing platform incorporated within a system-on-a-chip (SoC) integrated circuit for use in mobile, handheld, or embedded devices. In at least one embodiment, one or more graphics processor(s) 1708 include one or more graphics cores 1500.

In at least one embodiment, system 1700 can include, or be incorporated within a server-based gaming platform, a game console, including a game and media console, a mobile gaming console, a handheld game console, or an online game console. In at least one embodiment, system 1700 is a mobile phone, a smart phone, a tablet computing device or a mobile Internet device. In at least one embodiment, processing system 1700 can also include, couple with, or be integrated within a wearable device, such as a smart watch wearable device, a smart eyewear device, an augmented reality device, or a virtual reality device. In at least one embodiment, processing system 1700 is a television or set top box device having one or more processor(s) 1702 and a graphical interface generated by one or more graphics processor(s) 1708.

In at least one embodiment, one or more processor(s) 1702 each include one or more processor core(s) 1707 to process instructions which, when executed, perform operations for system and user software. In at least one embodiment, each of one or more processor core(s) 1707 is configured to process a specific instruction sequence 1709. In at least one embodiment, instruction sequence 1709 may facilitate Complex Instruction Set Computing (CISC), Reduced Instruction Set Computing (RISC), or computing via a Very Long Instruction Word (VLIW). In at least one embodiment, processor core(s) 1707 may each process a different instruction sequence 1709, which may include instructions to facilitate emulation of other instruction sequences. In at least one embodiment, processor core(s) 1707 may also include other processing devices, such a Digital Signal Processor (DSP).

In at least one embodiment, processor(s) 1702 includes a cache memory 1704. In at least one embodiment, processor(s) 1702 can have a single internal cache or multiple levels of internal cache. In at least one embodiment, cache memory is shared among various components of processor(s) 1702. In at least one embodiment, processor(s) 1702 also uses an external cache (e.g., a Level-3 (L3) cache or Last Level Cache (LLC)) (not shown), which may be shared among processor core(s) 1707 using known cache coherency techniques. In at least one embodiment, a register file 1706 is additionally included in processor(s) 1702, which may include different types of registers for storing different types of data (e.g., integer registers, floating point registers, status registers, and an instruction pointer register). In at least one embodiment, register file 1706 may include general-purpose registers or other registers.

In at least one embodiment, one or more processor(s) 1702 are coupled with one or more interface bus(es) 1710 to transmit communication signals such as address, data, or control signals between processor(s) 1702 and other components in system 1700. In at least one embodiment, interface bus(es) 1710 can be a processor bus, such as a version of a Direct Media Interface (DMI) bus. In at least one embodiment, interface bus(es) 1710 is not limited to a DMI bus, and may include one or more Peripheral Component Interconnect buses (e.g., PCI, PCI Express), memory busses, or other types of interface busses. In at least one embodiment processor(s) 1702 include an integrated memory controller 1716 and a platform controller hub 1730. In at least one embodiment, memory controller 1716 facilitates communication between a memory device and other components of system 1700, while platform controller hub (PCH) 1730 provides connections to I/O devices via a local I/O bus.

In at least one embodiment, a memory device 1720 can be a dynamic random access memory (DRAM) device, a static random access memory (SRAM) device, flash memory device, phase-change memory device, or some other memory device having suitable performance to serve as process memory. In at least one embodiment, memory device 1720 can operate as system memory for system 1700, to store data 1722 and instructions 1721 for use when one or more processor(s) 1702 executes an application or process. In at least one embodiment, memory controller 1716 also couples with an optional external graphics processor 1712, which may communicate with one or more graphics processor(s) 1708 in processor(s) 1702 to perform graphics and media operations. In at least one embodiment, a display device 1711 can connect to processor(s) 1702. In at least one embodiment, display device 1711 can include one or more of an internal display device, as in a mobile electronic device or a laptop device, or an external display device attached via a display interface (e.g., DisplayPort, etc.). In at least one embodiment, display device 1711 can include a head mounted display (HMD) such as a stereoscopic display device for use in virtual reality (VR) applications or augmented reality (AR) applications.

In at least one embodiment, platform controller hub 1730 enables peripherals to connect to memory device 1720 and processor(s) 1702 via a high-speed I/O bus. In at least one embodiment, I/O peripherals include, but are not limited to, an audio controller 1746, a network controller 1734, a firmware interface 1728, a wireless transceiver 1726, touch sensors 1725, a data storage device 1724 (e.g., hard disk drive, flash memory, etc.). In at least one embodiment, data storage device 1724 can connect via a storage interface (e.g., SATA) or via a peripheral bus, such as a Peripheral Component Interconnect bus (e.g., PCI, PCI Express). In at least one embodiment, touch sensors 1725 can include touch screen sensors, pressure sensors, or fingerprint sensors. In at least one embodiment, wireless transceiver 1726 can be a Wi-Fi transceiver, a Bluetooth transceiver, or a mobile network transceiver such as a 3G, 4G, or Long Term Evolution (LTE) transceiver. In at least one embodiment, firmware interface 1728 enables communication with system firmware, and can be, for example, a unified extensible firmware interface (UEFI). In at least one embodiment, network controller 1734 can enable a network connection to a wired network. In at least one embodiment, a high-performance network controller (not shown) couples with interface bus(es) 1710. In at least one embodiment, audio controller 1746 is a multi-channel high definition audio controller. In at least one embodiment, system 1700 includes an optional legacy I/O controller 1740 for coupling legacy (e.g., Personal System 2 (PS/2)) devices to system 1700. In at least one embodiment, platform controller hub 1730 can also connect to one or more Universal Serial Bus (USB) controller(s) 1742 connect input devices, such as keyboard and mouse 1743 combinations, a camera 1744, or other USB input devices.

In at least one embodiment, an instance of memory controller 1716 and platform controller hub 1730 may be integrated into a discreet external graphics processor, such as external graphics processor 1712. In at least one embodiment, platform controller hub 1730 and/or memory controller 1716 may be external to one or more processor(s) 1702. For example, in at least one embodiment, system 1700 can include an external memory controller 1716 and platform controller hub 1730, which may be configured as a memory controller hub and peripheral controller hub within a system chipset that is in communication with processor(s) 1702.

Embodiments presented herein can transmit sensor data stream from a remote device over a host device established RDMA connection.

Various embodiments can be described by the following clauses:
1. A processor, comprising:
   one or more circuits to:
   cause memory to be allocated for data associated with a remote sensor on device separate from the memory;
   send Remote Direct Memory Access (RDMA) initialization information, for transmitting over a RDMA connection, to a communication management device in local communication with the remote sensor, the RDMA initialization information including at least addresses in the memory;
   transmit, using the communication management device, the data over the RDMA connection with at least a portion of the RDMA initialization information; and
   store the data, associated with the remote sensor and received over the RDMA connection, to the memory according to the addresses.
2. The processor of clause 1, wherein the one or more circuits are further to:
   enter a Ready-to-Receive (RTR) state; and
   send instructions to the communication management device to enter a Ready-to-Send (RTS) state.
3. The processor of clause 1 or 2, wherein the communication management device comprises a Field Programmable Gate Array (FPGA) or an Application-Specific Integrated Circuit (ASIC).
4. The processor of clause 1, 2, or 3, wherein the one or more circuits are further to:
   receive the data transmitted over the RDMA connection to a Network Interface Card (NIC), wherein the data is stored to the memory using the NIC; and
   cause the data to be processed from the memory.
5. The processor of clause 4, wherein the data is processed at least in part to train a model or perform inferences.
6. The processor of any preceding clause, wherein the communication management device transmits the data over the RDMA connection as payload in one or more packets.
7. The processor of any preceding clause, wherein the one or more circuits are further to:
   store additional data, sent over the RDMA connection and associated with at least one additional remote sensor, to the memory according to the addresses.
8. The processor of clause 7, wherein the communication management device includes a networking switch to receive the data and the additional data.
9. A computer-implemented method, comprising:
   sending initialization data, associated with a host device, to one or more circuits on a remote device configured to transmit streaming data;
   causing the host device to allow for transmission of the streaming data;
   sending commands from the host device to the one or more circuits to allow for transmission of the streaming data; and
   transmitting, based on at least a portion of the identification values, the streaming data direct to memory between the remote device and the host device.
10. The computer-implemented method of clause 9, further comprising:
   allocating the memory in preparation of the transmission of the streaming data;
   including, in the initialization data, addresses in the allocated memory; and
   routing the transmitted to the memory based on the addresses.
11. The computer-implemented method of clause 10, wherein individual ones of the addresses are included in packets along with portions of the streaming data to be transmitted.
12. The computer-implemented method of clause 9, 10, or 11, wherein the one or more circuits comprises at least a FPGA or an ASIC.
13. The computer-implemented method of any of clauses 9-12, further comprising:
   sending additional commands from the host device to the one or more circuits to prepare the streaming data as packets compatible with the transmission direct to the memory.
14. The computer-implemented method of any of clauses 9-13, wherein the transmission of the streaming data direct to the memory bypasses an OS associated with the memory.
15. The computer-implemented method of any of clauses 9-14, wherein the streaming data is continuously generated by one or more sensors.
16. A system comprising:
   one or more processors to establish a communication path between a remote device receiving a sensor stream, and a destination device configured to communicate with the remote device, wherein the communication path is established by the destination device to write at least a portion of the sensor stream to memory.
17. The system of clause 16, wherein the communication path may be a physical Ethernet connection or an InfiniBand Connection.
18. The system of clause 16 or 17, wherein the one or more processors are further to:
   cause the destination device to send instructions to the remote device in order to establish the communication path.
19. The system of clause 16, 17, or 18, wherein the sensor stream includes data from a plurality of sensors.
20. The system of any of clauses 16-19, wherein the system comprises at least one of:
   a system for performing simulation operations;
   a system for performing simulation operations to test or validate autonomous machine applications;
   a system for performing digital twin operations;
   a system for performing light transport simulation;
   a system for rendering graphical output;
   a system for performing deep learning operations;
   a system for performing generative AI operations using a large language model (LLM);
   a system implemented using an edge device;
   a system for generating or presenting virtual reality (VR) content;
   a system for generating or presenting augmented reality (AR) content;
   a system for generating or presenting mixed reality (MR) content;
   a system incorporating one or more Virtual Machines (VMs);
   a system implemented at least partially in a data center;
   a system for performing hardware testing using simulation;
   a system for performing generative operations using a language model (LM);
   a system for synthetic data generation;
   a collaborative content creation platform for 3D assets; or
   a system implemented at least partially using cloud computing resources.

In at least one embodiment, a single semiconductor platform may refer to a sole unitary semiconductor-based integrated circuit or chip. In at least one embodiment, multi-chip modules may be used with increased connectivity which simulate on-chip operation, and make substantial improvements over using a conventional central processing unit ("CPU") and bus implementation. In at least one embodiment, various modules may also be situated separately or in various combinations of semiconductor platforms per desires of user.

In at least one embodiment, referring back to FIG. 11, computer programs in form of machine-readable executable code or computer control logic algorithms are stored in main memory 1104 and/or secondary storage. Computer programs, if executed by one or more processors, enable computer system 1100 to perform various functions in accordance with at least one embodiment. In at least one embodiment, main memory 1104, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous FIGS. 1-7 are implemented in context of CPU 1102, parallel processing system 1112, an integrated circuit capable of at least a portion of capabilities of both CPU 1102, parallel processing system 1112, a chipset (e.g., a group of integrated circuits designed to work and sold as a unit for performing related functions, etc.), and/or any suitable combination of integrated circuit(s).

In at least one embodiment, architecture and/or functionality of various previous FIGS. 1-7 are implemented in context of a general computer system, a circuit board system, a game console system dedicated for entertainment purposes, an application-specific system, and more. In at least one embodiment, computer system 1100 may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In at least one embodiment, parallel processing system 1112 includes, without limitation, a plurality of parallel processing units ("PPUs") 1114 and associated memories 1116. In at least one embodiment, PPUs 1114 are connected to a host processor or other peripheral devices via an interconnect 1118 and a switch 1120 or multiplexer. In at least one embodiment, parallel processing system 1112 distributes computational tasks across PPUs 1114 which can be parallelizable - for example, as part of distribution of computational tasks across multiple graphics processing unit ("GPU") thread blocks. In at least one embodiment, memory is shared and accessible (e.g., for read and/or write access) across some or all of PPUs 1114, although such shared memory may incur performance penalties relative to use of local memory and registers resident to a PPU 1114. In at least one embodiment, operation of PPUs 1114 is synchronized through use of a command such as _syncthreads(), wherein all threads in a block (e.g., executed across multiple PPUs 1114) to reach a certain point of execution of code before proceeding.

In at least one embodiment, one or more techniques described herein use a oneAPI programming model. In at least one embodiment, a oneAPI programming model refers to a programming model for interacting with various compute accelerator architectures. In at least one embodiment, oneAPI refers to an application programming interface (API) designed to interact with various compute accelerator architectures. In at least one embodiment, a oneAPI programming model uses a DPC++ programming language. In at least one embodiment, a DPC++ programming language refers to a high-level language for data parallel programming productivity. In at least one embodiment, a DPC++ programming language is based at least in part on C and/or C++ programming languages. In at least one embodiment, a oneAPI programming model is a programming model such as those developed by Intel Corporation of Santa Clara, CA.

In at least one embodiment, oneAPI and/or oneAPI programming model is used to interact with various accelerator, GPU, processor, and/or variations thereof, architectures. In at least one embodiment, oneAPI includes a set of libraries that implement various functionalities. In at least one embodiment, oneAPI includes at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

In at least one embodiment, a oneAPI DPC++ library, also referred to as oneDPL, is a library that implements algorithms and functions to accelerate DPC++ kernel programming. In at least one embodiment, oneDPL implements one or more standard template library (STL) functions. In at least one embodiment, oneDPL implements one or more parallel STL functions. In at least one embodiment, oneDPL provides a set of library classes and functions such as parallel algorithms, iterators, function object classes, range-based API, and/or variations thereof. In at least one embodiment, oneDPL implements one or more classes and/or functions of a C++ standard library. In at least one embodiment, oneDPL implements one or more random number generator functions.

In at least one embodiment, a oneAPI math kernel library, also referred to as oneMKL, is a library that implements various optimized and parallelized routines for various mathematical functions and/or operations. In at least one embodiment, oneMKL implements one or more basic linear algebra subprograms (BLAS) and/or linear algebra package (LAPACK) dense linear algebra routines. In at least one embodiment, oneMKL implements one or more sparse BLAS linear algebra routines. In at least one embodiment, oneMKL implements one or more random number generators (RNGs). In at least one embodiment, oneMKL implements one or more vector mathematics (VM) routines for mathematical operations on vectors. In at least one embodiment, oneMKL implements one or more Fast Fourier Transform (FFT) functions.

In at least one embodiment, a oneAPI data analytics library, also referred to as oneDAL, is a library that implements various data analysis applications and distributed computations. In at least one embodiment, oneDAL implements various algorithms for preprocessing, transformation, analysis, modeling, validation, and decision making for data analytics, in batch, online, and distributed processing modes of computation. In at least one embodiment, oneDAL implements various C++ and/or Java APIs and various connectors to one or more data sources. In at least one embodiment, oneDAL implements DPC++ API extensions to a traditional C++ interface and enables GPU usage for various algorithms.

In at least one embodiment, a oneAPI deep neural network library, also referred to as oneDNN, is a library that implements various deep learning functions. In at least one embodiment, oneDNN implements various neural network, machine learning, and deep learning functions, algorithms, and/or variations thereof.

In at least one embodiment, a oneAPI collective communications library, also referred to as oneCCL, is a library that implements various applications for deep learning and machine learning workloads. In at least one embodiment, oneCCL is built upon lower-level communication middleware, such as message passing interface (MPI) and libfabrics. In at least one embodiment, oneCCL enables a set of deep learning specific optimizations, such as prioritization, persistent operations, out of order executions, and/or variations thereof. In at least one embodiment, oneCCL implements various CPU and GPU functions.

In at least one embodiment, a oneAPI threading building blocks library, also referred to as oneTBB, is a library that implements various parallelized processes for various applications. In at least one embodiment, oneTBB is used for task-based, shared parallel programming on a host. In at least one embodiment, oneTBB implements generic parallel algorithms. In at least one embodiment, oneTBB implements concurrent containers. In at least one embodiment, oneTBB implements a scalable memory allocator. In at least one embodiment, oneTBB implements a work-stealing task scheduler. In at least one embodiment, oneTBB implements low-level synchronization primitives. In at least one embodiment, oneTBB is compiler-independent and usable on various processors, such as GPUs, PPUs, CPUs, and/or variations thereof.

In at least one embodiment, a oneAPI video processing library, also referred to as oneVPL, is a library that is used for accelerating video processing in one or more applications. In at least one embodiment, oneVPL implements various video decoding, encoding, and processing functions. In at least one embodiment, oneVPL implements various functions for media pipelines on CPUs, GPUs, and other accelerators. In at least one embodiment, oneVPL implements device discovery and selection in media centric and video analytics workloads. In at least one embodiment, oneVPL implements API primitives for zero-copy buffer sharing.

In at least one embodiment, a oneAPI programming model uses a DPC++ programming language. In at least one embodiment, a DPC++ programming language is a programming language that includes, without limitation, functionally similar versions of CUDA mechanisms to define device code and distinguish between device code and host code. In at least one embodiment, a DPC++ programming language may include a subset of functionality of a CUDA programming language. In at least one embodiment, one or more CUDA programming model operations are performed using a oneAPI programming model using a DPC++ programming language.

In at least one embodiment, any application programming interface (API) described herein is compiled into one or more instructions, operations, or any other signal by a compiler, interpreter, or other software tool. In at least one embodiment, compilation comprises generating one or more machine-executable instructions, operations, or other signals from source code. In at least one embodiment, an API compiled into one or more instructions, operations, or other signals, when performed, causes one or more processors such as graphics processor 1410, graphics processor 1440, graphics core 1500, parallel processor 1700, graphics processor 1900, or any other logic circuit further described herein to perform one or more computing operations.

It should be noted that, while example embodiments described herein may relate to a CUDA programming model, techniques described herein can be used with any suitable programming model, such HIP, oneAPI, and/or variations thereof.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A first device configured to communicate with a second device over a network, the first device configured to:
create a Queue Pair, QP, identifiable by a QP number;
transition the QP into a ready to receive state, wherein, to transition the QP into the ready to receive state, the first device is configured to:
generate a pseudo-QP number and a pseudo send queue, SQ, packet sequence number, PSN, for the second device;
set a destination network address attribute of the QP to the network address of the second device;
set a destination QP number attribute of the QP to the pseudo-QP number; and
set a receive queue packet sequence number attribute of the QP to the pseudo-SQ PSN; and
transmit the QP number and pseudo-SQ PSN to the second device.

2. The first device of claim 1, wherein the first device is further configured to:
receive protocol data units, PDUs, comprising a header and a payload, wherein the PDU header comprises the network address of the second device, wherein the PDU payload includes a transport header and data to be written to a memory of the first device, the transport header comprising the QP number and the pseudo-SQ PSN.

3. The first device of claim 2, wherein the transport header of the payload of at least some of the PDUs further comprises a memory address of a memory region of the first device and a key for accessing the memory region.

4. The first device of claim 3, wherein the first device is further configured to:
transmit a memory address of the memory region of the first device and the key for accessing the memory region to the second device.

5. The first device of any preceding claim, wherein the data to be written to a memory of the first device comprises a message, wherein the PDU payload further comprises immediate data.

6. The first device of any of claims 1 to 4, wherein the device is further configured to:
receive a sequence of PDUs comprising a first PDU and a last PDU,
wherein the data of the payload of the first PDU comprises a first portion of a message,
wherein the data of the payload of the last PDU comprises a last portion of a message, wherein the payload of the last PDU further comprises immediate data; and
write the message to memory and provide the immediate data to a processor of the first device.

7. The first device of claim 6, wherein the transport header of each payload of each PDU of the sequence of PDUs comprises a memory address of a memory region of the first device and a key for accessing the memory region.

8. The first device of any of claims 5-7, wherein the message comprises a sensor reading, and the immediate data specifies a timestamp of the sensor reading.

9. A method performed by a first device configured to communicate with a second device over a network, the method comprising:
creating a Queue Pair, QP, identifiable by a QP number;
transitioning the QP into a ready to receive state, wherein, to transition the QP into the ready to receive state, the first device is configured to:
generate a pseudo-QP number and a pseudo send queue, SQ, packet sequence number, PSN, for the second device;
set a destination network address attribute of the QP to the network address of the second device;
set a destination QP number attribute of the QP to the pseudo-QP number; and
set a receive queue packet sequence number attribute of the QP to the pseudo-SQ PSN; and
transmitting the QP number and pseudo-SQ PSN to the second device.

10. A second device configured to communicate with a first device over a network, the second device configured to:
receive a Queue Pair, QP, number, and pseudo send queue, SQ, packet sequence number, PSN, from the first device;
store the QP number and pseudo-SQ PSN;
transmit protocol data units comprising a header and a payload, wherein the header comprises a network address of the second device, wherein the payload includes a transport header and data to be written to a memory of the first device, the transport header comprising the QP number and the pseudo-SQ PSN.

11. The second device of claim 10, wherein the network address comprises a layer 2 address, such as a Media Access Control address or a Local Identifier.

12. The second device of claim 10 or 11, wherein the second device comprises:
processing circuitry configured construct the payload of the protocol data units; and
a network interface connecting the processing circuitry to the network.

13. The second device of claim 10, 11, or 12, wherein:
the processing circuitry comprises at least one register to store the transport header,
the second device stores the QP number and pseudo-SQ PSN in the transport header stored in the at least one register, and
the processing circuitry constructs the payload by copying the transport header into the payload and increments pseudo-SQ PSN in the register.

14. The second device of any of claims 10-13, wherein the data to be written to memory of the first device comprises at least a portion of a sensor reading.

15. A method performed by a second device configured to communicate with a first device over a network, the method comprising:
receiving a Queue Pair, QP, number, and pseudo send queue, SQ, packet sequence number, PSN, from the first device;
storing the QP number and pseudo-SQ PSN;
transmitting protocol data units comprising a header and a payload, wherein the header comprises a network address of the second device, wherein the payload includes a transport header and data to be written to a memory of the first device, the transport header comprising the QP number and the pseudo-SQ PSN.
